# EUROPEAN PATENT APPLICATION

(11) **EP 4 622 327 A1**
(43) Date of publication of application: **24.09.2025**
(21) Application number: 23910523.2
(22) Date of filing: 25.12.2023
(51) Int. Cl.: H04W 24/08, H04W 28/00

(54) **APPLICATION LAYER MEASUREMENT METHOD AND COMMUNICATION APPARATUS**

(30) Priority: 30.12.2022 CN 202211736125
(71) Applicant: Huawei Technologies Co., Ltd., Shenzhen, Guangdong 518129 (CN)
(72) Inventor: HU, Xingxing, Shenzhen, Guangdong 518129 (CN); CHEN, Jun, Shenzhen, Guangdong 518129 (CN)
(74) Representative: Grünecker Patent- und Rechtsanwälte PartG mbB
(86) International application number: PCT/CN2023/141636
(87) International publication number: WO 2024/140598

(57) **Abstract**

An application layer measurement method and a communication apparatus are provided, and may be applied to a multi-radio dual connectivity scenario. This helps improve efficiency of collecting an application layer measurement result in the scenario. The method may include: A terminal device receives a first message from a first access network device, where the first message carries first indication information, and the first indication information indicates the terminal device to release a secondary cell group; and when receiving second indication information indicating to release a first application layer measurement, the terminal device releases the first application layer measurement; or when the terminal device receives no second indication information, the first message does not indicate the terminal device to change an access network device to which a first application layer measurement result is reported, and the access network device to which the first application layer measurement result is reported is a second access network device before the first message is received, the terminal device releases a first application layer measurement or adjusts the access network device to which the first application layer measurement result is reported from the second access network device to the first access network device.

## Description

This application claims priority to Chinese Patent Application No. 202211736125.1, filed with the China National Intellectual Property Administration on December 30, 2022, and entitled "APPLICATION LAYER MEASUREMENT METHOD AND COMMUNICATION APPARATUS", which is incorporated herein by reference in its entirety.

### TECHNICAL FIELD

This application relates to the field of communication technologies, and in particular, to an application layer measurement method and a communication apparatus.

### BACKGROUND

For some streaming-type services or voice services, for example, a streaming service (streaming service) and a multimedia telephony service for internet protocol multimedia subsystem (multimedia telephony service for Internet protocol multimedia subsystem, MTSI), pure signal quality cannot reflect user experience when users use these services. In this case, operators want to know how user experience is, to better optimize networks to improve user experience. This type of measurement collection is referred to as application layer measurement collection, also referred to as quality of experience (quality of experience, QoE) measurement collection.

In a scenario in which one user terminal (user equipment, UE) communicates with one base station, a trace (trace) procedure or another procedure may be used for application layer measurement, namely, a signaling-based application layer measurement and a management-based application layer measurement. The signaling-based application layer measurement is an application layer measurement for a specific UE. For example, a core network sends signaling-based application layer measurement configuration information to the base station via UE-level signaling. The management-based application layer measurement is not for a specific UE. For example, a network management device or an operation, administration, and maintenance (operation, administration, and maintenance, OAM) device sends management-based application layer measurement configuration information to a base station, and the base station selects a part of UEs to perform the application layer measurement. For the application layer measurement in this scenario, the UE reports an application layer measurement result to the base station communicating with the UE.

In a scenario in which one UE communicates with a plurality of base stations, namely, in a multi-radio dual connectivity (multi-radio dual connectivity, MR-DC) scenario, how to perform an application layer measurement is an urgent technical problem to be resolved.

### SUMMARY

Embodiments of this application provide an application layer measurement method and a communication apparatus. This helps improve efficiency of collecting an application layer measurement result in an MR-DC scenario.

According to a first aspect, an embodiment of this application provides an application layer measurement method. The method may be performed by a terminal device, or may be performed by an apparatus, for example, a processor, a chip, or a chip system, matching the terminal device. The method may include: The terminal device receives a first message from a first access network device, where the first message carries first indication information, and the first indication information indicates the terminal device to release a secondary cell group; and when receiving second indication information, the terminal device releases a first application layer measurement, where the second indication information indicates the terminal device to release the first application layer measurement; or when the terminal device receives no second indication information, the first message does not indicate to change an access network device to which a first application layer measurement result is reported, and the access network device to which the first application layer measurement result is reported is a second access network device before the first message is received, the terminal device releases a first application layer measurement or adjusts the access network device to which the first application layer measurement result is reported from the second access network device to the first access network device, where the second indication information indicates the terminal device to release the first application layer measurement; and the first application layer measurement corresponds to first application layer measurement configuration information of the second access network device, and the first application layer measurement result is a measurement result of the first application layer measurement.

It may be learned that, when the terminal device receives the first indication information for releasing the secondary cell group, if the terminal device also receives the second indication information indicating to release the first application layer measurement, the terminal device releases the first application layer measurement, and is explicitly indicated to release, by using the second indication information, the first application layer measurement, to prevent the terminal device from incorrectly understanding a command of the access network device. This helps improve efficiency of collecting the application layer measurement result. If the terminal device receives no second indication information indicating to release the first application layer measurement, the first message does not indicate to change the access network device to which the first application layer measurement result is reported, and an access network device to which the first application layer measurement result is currently reported is the second access network device, the terminal device may release the first application layer measurement or change the access network device to which the first application layer measurement result is reported. This may reduce signaling overheads, and help improve efficiency of collecting the application layer measurement result.

The access network device to which the first application layer measurement result is currently reported is the access network device to which the first application layer measurement result is reported before the first message is received. The first access network device may be understood as a primary access network device in an MR-DC scenario, and the second access network device may be understood as a secondary access network device in the MR-DC scenario. The primary access network device may explicitly indicate, by using the second indication information, the terminal device to release the first application layer measurement configured by the secondary access network device, or the terminal device may autonomously determine whether to release the first application layer measurement or change the access network device to which the first application layer measurement result is reported.

In a possible implementation, both the first indication information and the second indication information are carried in the first message. In other words, the first message may carry not only the first indication information indicating the terminal device to release the secondary cell group, but also the second indication information indicating whether to indicate the terminal device to release the first application layer measurement. In this way, not only signaling overheads can be reduced, but also the terminal device can be prevented from incorrectly understanding the command of the access network device.

In a possible implementation, when determining that the first application layer measurement result is not correctly received by the second access network device, the terminal device reports the first application layer measurement result to the first access network device, so that the first access network device can receive the complete first application layer measurement result. This helps improve efficiency of collecting the application layer measurement result on the access network device side.

In a possible implementation, the terminal device receives a second message, where the second message is used to configure conditional handover (conditional handover, CHO) or conditional primary secondary cell addition (conditional primary secondary cell Addition, CPA) or conditional primary secondary cell change (conditional primary secondary cell change, CPC), and the second message includes a trigger condition of each candidate cell in at least one candidate cell; and the terminal device determines a target cell from the at least one candidate cell based on the trigger condition of each candidate cell in the at least one candidate cell, where a trigger condition of the target cell is met; and sends measurement status information of the first application layer measurement to an access network device corresponding to the target cell, where the measurement status information of the first application layer measurement includes start indication information, and the start indication information indicates whether the first application layer measurement is started.

Optionally, the start indication information may indicate that the first application layer measurement has been started or is not started. Optionally, the start indication information may indicate that the first application layer measurement has been started. Optionally, the start indication information may indicate that the first application layer measurement is not started. In other words, the start indication information may indicate whether the first application layer measurement is started, or may indicate only that the first application layer measurement has been started, or may indicate only that the first application layer measurement is not started.

It may be learned that the terminal device reports the measurement status information to the access network device corresponding to the target cell, so that the access network device corresponding to the target cell can obtain latest measurement status information, and the access network device corresponding to the target cell can formulate a policy or adjust a policy based on the latest measurement status information, for example, formulate a policy indicating whether to release a specific application layer measurement.

The measurement status information of the first application layer measurement further includes one or more of the following information: an application layer measurement identifier of the first application layer measurement, reference information of the first application layer measurement, and end indication information of the first application layer measurement, and the end indication information indicates whether the first application layer measurement ends. The application layer measurement identifier of the first application layer measurement identifies the first application layer measurement. The reference information of the first application layer measurement identifies an application layer measurement collection task between the access network device and a measurement collection entity. There is a correspondence, for example, a one-to-one correspondence, between the application layer measurement identifier and the reference information.

According to a second aspect, an embodiment of this application provides an application layer measurement method. The method may be performed by a first access network device, or may be performed by an apparatus, for example, a processor, a chip, or a chip system, matching the first access network device. The method may include: When determining to retain a first application layer measurement configuration, and that an access network device to which a first application layer measurement result is currently reported is a second access network device, the first access network device sends a first message to a terminal device, where the first message indicates the terminal device to change an access network device to which the first application layer measurement result is reported; or when determining not to retain a first application layer measurement configuration, the first access network device sends a first message to a terminal device, where the first message indicates the terminal device to release a first application layer measurement, where the first application layer measurement configuration corresponds to the second access network device, and the first application layer measurement result is a measurement result of the first application layer measurement. In other words, the first application layer measurement is application layer measurement configured by the second access network device, and the first application layer measurement configuration is used to configure the first application layer measurement.

It may be learned that the first access network device may determine whether to retain the first application layer measurement configuration, to send the corresponding first message to the terminal device, and indicate the terminal device to release the first application layer measurement or change the access network device to which the first application layer measurement result is reported, so that the terminal device can be prevented from incorrectly understanding a command. This helps improve efficiency of collecting the application layer measurement result.

The first access network device may be understood as a primary access network device in an MR-DC scenario, and the second access network device may be understood as a secondary access network device in the MR-DC scenario. The primary access network device may indicate the terminal device to release an application layer measurement configured by the secondary access network device, or change the access network device to which the application layer measurement result is reported.

In a possible implementation, the first access network device receives first application layer measurement information from the second access network device, where the first application layer measurement information includes one or more of the following information: an application layer measurement identifier of the first application layer measurement, reference information of the first application layer measurement, address information of a measurement collection entity corresponding to the first application layer measurement, effective area information corresponding to the first application layer measurement, and the access network device to which the first application layer measurement result is currently reported; and the first application layer measurement information is used to determine whether to retain the first application layer measurement configuration. The first access network device may determine, based on the first application layer measurement information sent by the second access network device, whether to retain the first application layer measurement configuration.

In a possible implementation, after the first access network device determines to retain the first application layer measurement configuration, the first access network device sends a third message to a target access network device, where the third message is used to request the terminal device to send the first application layer measurement result to the target access network device. The target access network device may be understood as a target secondary access network device in a scenario in which the secondary access network device is changed. The first access network device requests the terminal device to send the first application layer measurement result to the target access network device, in other words, the first access network device determines to change the access network device to which the first application layer measurement result is reported to the target access network device, so that the target access network device can obtain the complete first application layer measurement result.

In a possible implementation, when the first access network device has configured CPC for the terminal device and a trigger condition of a target cell is met, the first access network device sends measurement status information of the first application layer measurement to an access network device corresponding to the target cell, where the measurement status information of the first application layer measurement includes start indication information, and the start indication information indicates whether the first application layer measurement is started.

Optionally, the start indication information may indicate that the first application layer measurement has been started or is not started. Optionally, the start indication information may indicate that the first application layer measurement has been started. Optionally, the start indication information may indicate that the first application layer measurement is not started. In other words, the start indication information may indicate whether the first application layer measurement is started, or may indicate only that the first application layer measurement has been started, or may indicate only that the first application layer measurement is not started.

It may be learned that the first access network device reports the measurement status information to the access network device corresponding to the target cell, so that the access network device corresponding to the target cell can obtain latest measurement status information, and the access network device corresponding to the target cell can formulate a policy or adjust a policy based on the latest measurement status information, for example, formulate a policy indicating whether to release a specific application layer measurement.

Further, the measurement status information of the first application layer measurement further includes one or more of the following information: the application layer measurement identifier of the first application layer measurement, the reference information of the first application layer measurement, and end indication information of the first application layer measurement, and the end indication information indicates whether the first application layer measurement ends. The application layer measurement identifier of the first application layer measurement identifies the first application layer measurement. The reference information of the first application layer measurement identifies an application layer measurement collection task between the access network device and the measurement collection entity. There is a correspondence, for example, a one-to-one correspondence, between the application layer measurement identifier and the reference information.

According to a third aspect, an embodiment of this application provides an application layer measurement method. The method may be performed by a terminal device, or may be performed by an apparatus, for example, a processor, a chip, or a chip system, matching the terminal device. The method may include: The terminal device receives a first message from a first access network device, where the first message carries first indication information, and the first indication information indicates to release and add a secondary cell group; and when receiving second indication information, the terminal device releases a first application layer measurement, where the second indication information indicates the terminal device to release the first application layer measurement; or the terminal device determines, in response to the first indication information, whether to release a first application layer measurement when releasing the secondary cell group, where the first application layer measurement corresponds to first application layer measurement configuration information of a second access network device.

It may be learned that, when the terminal device receives the first indication information for releasing and adding the secondary cell group, if the terminal device also receives the second indication information indicating to release the first application layer measurement, the terminal device releases the first application layer measurement, and is explicitly indicated to release, by using the second indication information, the first application layer measurement, to prevent the terminal device from incorrectly understanding a command of the access network device. This helps improve efficiency of collecting an application layer measurement result. Alternatively, when releasing the secondary cell group, the terminal device determines whether to release the first application layer measurement, so that signaling overheads can be reduced, and efficiency of collecting the application layer measurement result can be improved.

The first access network device may be understood as a primary access network device in an MR-DC scenario, and the second access network device may be understood as a secondary access network device in the MR-DC scenario. The primary access network device may explicitly indicate, by using the second indication information, the terminal device to release the first application layer measurement configured by the secondary access network device, or the terminal device may autonomously determine, when releasing a secondary cell, whether to release the first application layer measurement.

In a possible implementation, that the terminal device determines whether to release the first application layer measurement may include: When the first message further carries secondary cell group configuration information, and the secondary cell group configuration information carries third indication information, the terminal device determines to retain the first application layer measurement, where the third indication information indicates the terminal device to retain the first application layer measurement. It may be learned that the terminal device determines, based on the third indication information, to retain the first application layer measurement, so that the command of the access network device can be prevented from being incorrectly understood.

The third indication information may further indicate the terminal device to adjust an access network device to which a first application layer measurement result is reported from the second access network device to the first access network device, so that the terminal device adjusts, based on the third indication information, the access network device to which the first application layer measurement result is reported from the second access network device to the first access network device.

In another possible implementation, that the terminal device determines whether to release the first application layer measurement may include: When the first message further carries secondary cell group configuration information, and the secondary cell group configuration information carries fourth indication information, the terminal device releases the first application layer measurement, where the fourth indication information indicates the terminal device to release the first application layer measurement. It may be learned that the terminal device determines, based on the fourth indication information, to release the first application layer measurement, so that the command of the access network device can be prevented from being incorrectly understood.

In a possible implementation, when determining that the first application layer measurement result is not correctly received by the second access network device, the terminal device reports the first application layer measurement result to the first access network device, so that the first access network device can receive the complete first application layer measurement result. This helps improve efficiency of collecting the application layer measurement result on the access network device side.

In a possible implementation, the terminal device receives a second message, where the second message is used to configure CHO or CPA or CPC, and the second message includes a trigger condition of each candidate cell in at least one candidate cell; and the terminal device determines a target cell from the at least one candidate cell based on the trigger condition of each candidate cell in the at least one candidate cell, where a trigger condition of the target cell is met; and sends measurement status information of the first application layer measurement to an access network device corresponding to the target cell, where the measurement status information of the first application layer measurement includes start indication information, and the start indication information indicates whether the first application layer measurement is started.

It may be learned that the terminal device reports the measurement status information to the access network device corresponding to the target cell, so that the access network device corresponding to the target cell can obtain latest measurement status information, and the access network device corresponding to the target cell can formulate a policy or adjust a policy based on the latest measurement status information, for example, formulate a policy indicating whether to release a specific application layer measurement.

Further, the measurement status information of the first application layer measurement further includes one or more of the following information: an application layer measurement identifier of the first application layer measurement, reference information of the first application layer measurement, and end indication information of the first application layer measurement, and the end indication information indicates whether the first application layer measurement ends. The application layer measurement identifier of the first application layer measurement identifies the first application layer measurement. The reference information of the first application layer measurement identifies an application layer measurement collection task between the access network device and a measurement collection entity. There is a correspondence, for example, a one-to-one correspondence, between the application layer measurement identifier and the reference information.

According to a fourth aspect, an embodiment of this application provides an application layer measurement method. The method may be performed by a third access network device, or may be performed by an apparatus, for example, a processor, a chip, or a chip system, matching the third access network device. The method may include: The third access network device receives first application layer measurement information from a first access network device, where the first application layer measurement information includes one or more of the following information: an application layer measurement identifier of a first application layer measurement, reference information of the first application layer measurement, address information of a measurement collection entity corresponding to the first application layer measurement, effective area information corresponding to the first application layer measurement, and an access network device to which a first application layer measurement result is reported; and when determining, based on the first application layer measurement information, to change the access network device to which the first application layer measurement result is reported, and that an access network device to which the first application layer measurement result is currently reported is a second access network device, sends first information to a terminal device, where the first information indicates the terminal device to change the access network device to which the first application layer measurement result is reported; or when determining, based on the first application layer measurement information, to release the first application layer measurement, sends first information to a terminal device, where the first information indicates the terminal device to release the first application layer measurement.

It may be learned that the third access network device may determine, based on the first application layer measurement information, whether to retain the first application layer measurement, to send the corresponding first information to the terminal device, so that the terminal device can be prevented from incorrectly understanding a command. This helps improve efficiency of collecting the application layer measurement result.

In a possible implementation, the third access network device sends a secondary access network device addition request acknowledgment message to the first access network device, where the secondary access network device addition request acknowledgment message is used to request the terminal device to send the first application layer measurement result to the first access network device.

The secondary access network device addition request acknowledgment message further indicates an application layer measurement that has been accepted by the third access network device.

The third access network device may be understood as a target secondary access network device in a scenario in which a secondary access network device is changed.

According to a fifth aspect, an embodiment of this application provides an application layer measurement method. The method may be performed by a terminal device, or may be performed by an apparatus, for example, a processor, a chip, or a chip system, matching the terminal device. The method may include: The terminal device receives a fourth message from a first access network device, where the fourth message carries full configuration indication information; and if secondary cell group configuration information carried in the fourth message does not carry an application layer measurement identifier, releases a first application layer measurement, where the first application layer measurement corresponds to first application layer measurement configuration information of a second access network device.

It may be learned that when the secondary cell configuration information carried in the fourth message does not carry any application layer measurement identifier, the terminal device releases the first application layer measurement delivered by the second access network device.

In a possible implementation, if information other than the secondary cell group configuration information in the fourth message does not carry the application layer measurement identifier, the terminal device releases a second application layer measurement, where the second application layer measurement corresponds to second application layer measurement configuration information of the first access network device.

In a possible implementation, when determining that a first application layer measurement result is not correctly received by the second access network device, the terminal device reports the first application layer measurement result to the first access network device, so that the first access network device can receive the complete first application layer measurement result. This helps improve efficiency of collecting the application layer measurement result on the access network device side.

According to a sixth aspect, an embodiment of this application provides an application layer measurement method. The method may be performed by an access network device corresponding to a target cell, or may be performed by an apparatus, for example, a processor, a chip, or a chip system, matching the access network device corresponding to the target cell. The method may include: When CHP or CPA or CPC has been configured and a trigger condition of the target cell is met, the access network device corresponding to the target cell receives measurement status information of a first application layer measurement, where the measurement status information of the first application layer measurement includes start indication information, and the start indication information indicates whether the first application layer measurement is started.

It may be learned that the access network device corresponding to the target cell may obtain the measurement status information of the first application layer measurement, so that the access network device corresponding to the target cell can formulate a policy or adjust a policy based on latest measurement status information, for example, formulate a policy indicating whether to release a specific application layer measurement.

In a possible implementation, the measurement status information of the first application layer measurement is from a terminal device.

In another possible implementation, the measurement status information of the first application layer measurement is from a first access network device.

In still another possible implementation, the measurement status information of the first application layer measurement is from a second access network device.

In a possible implementation, the measurement status information of the first application layer measurement further includes one or more of the following information: an application layer measurement identifier of the first application layer measurement, reference information of the first application layer measurement, and end indication information of the first application layer measurement, and the end indication information indicates whether the first application layer measurement ends. The application layer measurement identifier of the first application layer measurement identifies the first application layer measurement. The reference information of the first application layer measurement identifies an application layer measurement collection task between the access network device and a measurement collection entity. There is a correspondence, for example, a one-to-one correspondence, between the application layer measurement identifier and the reference information.

According to a seventh aspect, an embodiment of this application provides an application layer measurement method. The method may be performed by a terminal device, or may be performed by an apparatus, for example, a processor, a chip, or a chip system, matching the terminal device. The method may include: The terminal device receives a second message, where the second message is used to configure CHO or CPA or CPC, and the second message includes a trigger condition of each candidate cell in at least one candidate cell; determines a target cell from the at least one candidate cell based on the trigger condition of each candidate cell in the at least one candidate cell, where a trigger condition of the target cell is met; and sends measurement status information of a first application layer measurement to an access network device corresponding to the target cell, where the measurement status information of the first application layer measurement includes start indication information, and the start indication information indicates whether the first application layer measurement is started.

It may be learned that the terminal device reports the measurement status information to the access network device corresponding to the target cell, so that the access network device corresponding to the target cell can obtain latest measurement status information, and the access network device corresponding to the target cell can formulate a policy or adjust a policy based on the latest measurement status information, for example, formulate a policy indicating whether to release a specific application layer measurement.

In a possible implementation, the measurement status information of the first application layer measurement further includes one or more of the following information: an application layer measurement identifier of the first application layer measurement, reference information of the first application layer measurement, and end indication information of the first application layer measurement, and the end indication information indicates whether the first application layer measurement ends. The application layer measurement identifier of the first application layer measurement identifies the first application layer measurement. The reference information of the first application layer measurement identifies an application layer measurement collection task between the access network device and a measurement collection entity. There is a correspondence, for example, a one-to-one correspondence, between the application layer measurement identifier and the reference information.

According to an eighth aspect, an embodiment of this application provides an application layer measurement method. The method may be performed by a first access network device, or may be performed by an apparatus, for example, a processor, a chip, or a chip system, matching the first access network device. The method may include: When CHO or CPA or CPC has been configured for a terminal device and a trigger condition of a target cell is met, the first access network device sends measurement status information of a first application layer measurement to an access network device corresponding to the target cell, where the measurement status information of the first application layer measurement includes start indication information, and the start indication information indicates whether the first application layer measurement is started.

It may be learned that the first access network device reports the measurement status information to the access network device corresponding to the target cell, so that the access network device corresponding to the target cell can obtain latest measurement status information, and the access network device corresponding to the target cell can formulate a policy or adjust a policy based on the latest measurement status information, for example, formulate a policy indicating whether to release a specific application layer measurement.

In a possible implementation, the measurement status information of the first application layer measurement further includes one or more of the following information: an application layer measurement identifier of the first application layer measurement, reference information of the first application layer measurement, and end indication information of the first application layer measurement, and the end indication information indicates whether the first application layer measurement ends. The application layer measurement identifier of the first application layer measurement identifies the first application layer measurement. The reference information of the first application layer measurement identifies an application layer measurement collection task between the access network device and a measurement collection entity. There is a correspondence, for example, a one-to-one correspondence, between the application layer measurement identifier and the reference information.

According to a ninth aspect, an embodiment of this application provides an application layer measurement method. The method may be performed by a second access network device, or may be performed by an apparatus, for example, a processor, a chip, or a chip system, matching the second access network device. The method may include: When CPC has been configured for a terminal device and a trigger condition of a target cell is met, the second access network device sends measurement status information of a first application layer measurement to an access network device corresponding to the target cell, where the measurement status information of the first application layer measurement includes start indication information, and the start indication information indicates whether the first application layer measurement is started.

It may be learned that the second access network device reports the measurement status information to the access network device corresponding to the target cell, so that the access network device corresponding to the target cell can obtain latest measurement status information, and the access network device corresponding to the target cell can formulate a policy or adjust a policy based on the latest measurement status information, for example, formulate a policy indicating whether to release a specific application layer measurement.

In a possible implementation, the measurement status information of the first application layer measurement further includes one or more of the following information: an application layer measurement identifier of the first application layer measurement, reference information of the first application layer measurement, and end indication information of the first application layer measurement, and the end indication information indicates whether the first application layer measurement ends. The application layer measurement identifier of the first application layer measurement identifies the first application layer measurement. The reference information of the first application layer measurement identifies an application layer measurement collection task between the access network device and a measurement collection entity. There is a correspondence, for example, a one-to-one correspondence, between the application layer measurement identifier and the reference information.

According to a tenth aspect, this application provides a communication apparatus. The communication apparatus may be a terminal device, or may be an apparatus in the terminal device, or may be an apparatus that can be used together with the terminal device. The communication apparatus may alternatively be a chip system. The communication apparatus may perform the method according to the first aspect, the third aspect, the fifth aspect, or the seventh aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the first aspect, the third aspect, the fifth aspect, or the seventh aspect.

According to an eleventh aspect, this application provides a communication apparatus. The communication apparatus may be a first access network device, or may be an apparatus in the first access network device, or may be an apparatus that can be used together with the first access network device. The communication apparatus may alternatively be a chip system. The communication apparatus may perform the method according to the second aspect or the eighth aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the second aspect or the eighth aspect.

According to a twelfth aspect, this application provides a communication apparatus. The communication apparatus may be a third access network device, or may be an apparatus in the third access network device, or may be an apparatus that can be used together with the third access network device. The communication apparatus may alternatively be a chip system. The communication apparatus may perform the method according to the fourth aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the fourth aspect.

According to a thirteenth aspect, this application provides a communication apparatus. The communication apparatus may be an access network device corresponding to a target cell, or may be an apparatus in the access network device corresponding to the target cell, or may be an apparatus that can be used together with the access network device corresponding to the target cell. The communication apparatus may alternatively be a chip system. The communication apparatus may perform the method according to the sixth aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the sixth aspect.

According to a fourteenth aspect, this application provides a communication apparatus. The communication apparatus may be a second access network device, or may be an apparatus in the second access network device, or may be an apparatus that can be used together with the second access network device. The communication apparatus may alternatively be a chip system. The communication apparatus may perform the method according to the ninth aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the ninth aspect.

According to a fifteenth aspect, this application provides a communication apparatus. The communication apparatus includes a processor. The processor is coupled to a memory. The memory is configured to store a program or instructions. When the program or the instructions are executed by the processor, the communication apparatus is caused to perform the method according to any one of the first aspect to the ninth aspect.

According to a sixteenth aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the first aspect to the ninth aspect using a logic circuit or by executing code instructions.

According to a seventeenth aspect, this application provides a computer-readable storage medium. The computer-readable storage medium stores a computer program or instructions. When the computer program or the instructions are executed by a communication apparatus, the method according to any one of the first aspect to the ninth aspect is implemented.

According to an eighteenth aspect, this application provides a computer program product including instructions. When a communication apparatus reads and executes the instructions, the communication apparatus is caused to perform the method according to any one of the first aspect to the ninth aspect.

### BRIEF DESCRIPTION OF DRAWINGS

FIG. 1 is a schematic flowchart of conditional handover;
FIG. 2 is a schematic flowchart of CPA triggered by an MN;
FIG. 3 is a schematic flowchart of an application layer measurement in a scenario in which one UE communicates with one base station;
FIG. 4 is a diagram of a system architecture to which an embodiment of this application is applied;
FIG. 5 is a schematic flowchart of an application layer measurement method according to an embodiment of this application;
FIG. 6 is a schematic flowchart of another application layer measurement method according to an embodiment of this application;
FIG. 7 is a schematic flowchart of still another application layer measurement method according to an embodiment of this application;
FIG. 8 is a schematic flowchart of still another application layer measurement method according to an embodiment of this application;
FIG. 9 is a schematic flowchart of still another application layer measurement method according to an embodiment of this application;
FIG. 10 is a schematic flowchart of still another application layer measurement method according to an embodiment of this application;
FIG. 11 is a diagram of a structure of a communication apparatus according to this application; and
FIG. 12 is a diagram of another structure of a communication apparatus according to this application.

### DESCRIPTION OF EMBODIMENTS

In this application, terms such as "first" and "second" are used for distinguishing between same items or similar items that provide basically same functions or purposes. A person skilled in the art may understand that the terms such as "first" and "second" do not limit a quantity or an execution sequence, and the terms such as "first" and "second" do not indicate a definite difference. The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects.

It should be understood that in this application, "at least one" means one or more, and "a plurality of" means two or more. In addition, "equal to" in this application may be used together with "greater than", or may be used together with "less than." When "equal to" and "greater than" are used together, a technical solution of "greater than" is used. When "equal to" and "less than" are used together, a technical solution of "less than" is used.

The following first describes related names or terms in this application, to facilitate understanding by a person skilled in the art.

### 1. MR-DC scenario

In a wireless network, one UE may communicate with a plurality of base stations, namely, MR-DC. The plurality of base stations may be base stations in a same radio access technology (radio access technology, RAT), for example, are all base stations in a 5^{th} generation (5^{th} generation, 5G) system. Alternatively, the plurality of base stations may be base stations in different RATs. For example, one base station is a base station in a 4^{th} generation (4^{th} generation, 4G) system, and another base station is a base station in a 5G system. A network side may provide a communication service for the UE by using resources of the plurality of base stations in the MR-DC scenario, to provide high-rate transmission for the UE.

In the MR-DC scenario, a base station that exchanges control plane signaling with a core network may be referred to as a master base station (master node, MN), and another base station may be referred to as a secondary base station (secondary node, SN). The master base station may also describe a primary access network device, a primary node, or the like. The secondary base station may also be described as a secondary access network device, a secondary node, or the like. In the MR-DC scenario, there may be one master base station and at least one secondary base station.

Based on a RAT to which the base station belongs, the MR-DC scenarios may be further divided into the following dual-connectivity scenarios:
(1) Evolved universal terrestrial radio access network new radio-dual connectivity (evolved universal terrestrial radio access network new radio-dual connectivity, EN-DC). In EN-DC, the master base station is a long term evolution (long term evolution, LTE) base station (namely, an eNB) connected to a 4G core network, and the secondary base station is a new radio (new radio, NR) base station.
(2) Next generation radio access network-new radio-dual connectivity (NG-RAN E-UTRA-NR dual connectivity, NGEN-DC). In NGEN-DC, the master base station is a base station ng-eNB connected to a 5G core network, and the secondary base station is an NR base station.
(3) New radio universal terrestrial radio access dual connectivity (NR-E-UTRA dual connectivity, NE-DC). In NE-DC, the master base station is an NR base station connected to a 5G core network, and the secondary base station is an LTE base station.
(4) New radio-dual connectivity (new radio-dual connectivity, NR-DC). In NR-DC, the master base station is an NR base station connected to a 5G core network, and the secondary base station is also an NR base station.

In the MR-DC scenario, both the master base station and the secondary base station may generate a radio resource control (radio resource control, RRC) message, and the RRC message is a control message, for example, a measurement message. The secondary base station may directly send the RRC message generated by the secondary base station to the UE, or may first send the RRC message generated by the secondary base station to the master base station, and then the master base station sends the RRC message to the UE.

In the MR-DC scenario, there is one primary cell in coverage of the master base station, and there is one primary secondary cell in coverage of the secondary base station. The primary cell is a cell that is deployed on a primary frequency and that is used by the UE to initiate an initial connection establishment process or a connection re-establishment process. Alternatively, the primary cell may be a cell that indicates the primary cell in a handover process. The primary secondary cell is a cell in which the secondary base station initiates a random access procedure, or a cell in which the UE skips a random access procedure and initiates data transmission in a change process of the secondary base station, or a cell of the secondary base station in which the UE initiates random access in a process of performing synchronous reconfiguration.

### 2. Conditional handover (CHO), conditional primary secondary cell addition (CPA), and conditional primary secondary cell change (CPC)

### (1) Conditional handover

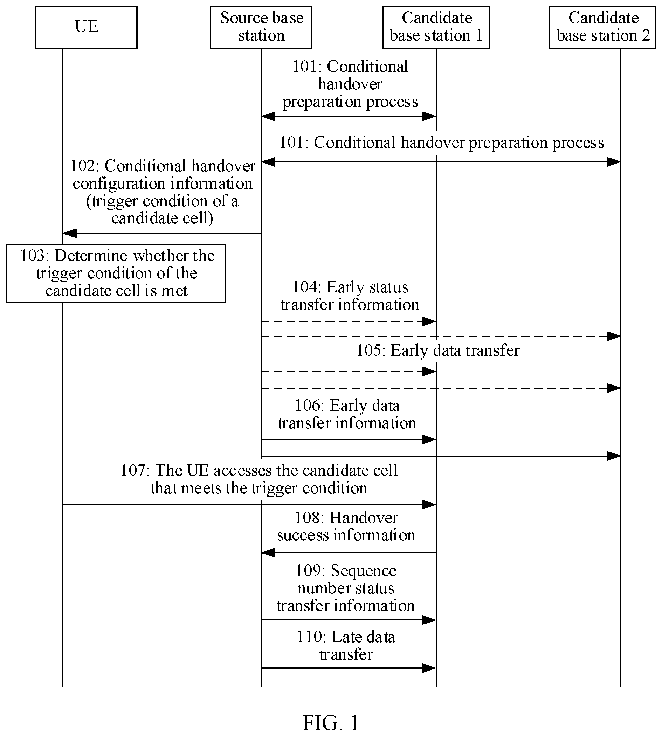

A core idea of the conditional handover is that a network side sends configuration information of a candidate cell and a trigger condition of the candidate cell to the UE. The UE determines whether the candidate cell meets the trigger condition, and initiates random access to the candidate cell when the candidate cell meets the trigger condition. In the conditional handover, there is no need to wait for the UE to report a measurement report before delivering a configuration of a target cell to the UE, so that a latency required for the handover can be shortened. In addition, the conditional handover can also improve robustness of the handover. The conditional handover may be applicable to both an MR-DC and a non-MR-DC scenario. For a schematic flowchart of the conditional handover, refer to FIG. 1. The procedure shown in FIG. 1 may include the following steps.

101: Perform a conditional handover preparation process between a source base station and a candidate base station. For example, in FIG. 1, the source base station performs the conditional handover preparation process with a candidate base station 1, and the source base station performs the conditional handover preparation process with a candidate base station 2.

The source base station may perform the conditional handover preparation process with a plurality of candidate base stations, or the source base station may perform the conditional handover preparation process with one or more candidate cells of one candidate base station. Optionally, for one candidate cell, the source base station performs one conditional handover preparation process with the candidate base station, that is, one conditional handover preparation process is specific to one candidate cell. In this embodiment of this application, the source base station may perform the conditional handover preparation process with the one or more candidate cells of the candidate base station.

For example, performing the conditional handover preparation process between the source base station and the candidate base station may include: The source base station sends a handover request message to the candidate base station, where the handover request message carries indication information, and the indication information indicates that a purpose of this request is the conditional handover; and the candidate base station sends a handover request acknowledgment message to the source base station, where the handover request acknowledgment message carries an RRC reconfiguration message corresponding to the candidate cell, and the RRC reconfiguration message corresponding to the candidate cell is configured by the candidate base station for the UE, and may include the configuration information of the candidate cell.

102: The source base station sends conditional handover configuration information to the UE. Correspondingly, the UE receives the conditional handover configuration information from the source base station.

The conditional handover configuration information may include the trigger condition of the candidate cell and the RRC reconfiguration message that corresponds to the candidate cell and that is configured by the candidate base station for the UE. Optionally, the conditional handover configuration information may include trigger conditions of a plurality of candidate cells and an RRC reconfiguration message corresponding to each candidate cell.

The trigger condition is usually that signal quality of the candidate cell meets a specific condition. For example, the signal quality of the candidate cell is higher than a threshold.

Before accessing the candidate cell that meets the trigger condition, the UE maintains a connection to the source base station, and the source base station continues to perform uplink data transmission and/or downlink data transmission with the UE.

103: The UE determines whether the trigger condition of the candidate cell is met.

When the UE receives the conditional handover configuration information, the UE continues to maintain a connection to a cell in the source base station, and starts to determine whether the candidate cell meets the trigger condition of the candidate cell. When there are a plurality of candidate cells, the UE determines whether each candidate cell meets a respective trigger condition, and trigger conditions of different candidate cells may be different.

104: The source base station sends early status transfer information to the candidate base station. For example, in FIG. 1, the source base station sends the early status transfer information to a candidate base station 1, and the source base station sends the early status transfer information to a candidate base station 2.

When the source base station supports early data transfer, the source base station sends the early status transfer (early status transfer) information to the candidate base station, and the early status transfer information indicates a count (count) value corresponding to a downlink data packet for performing early data transfer. Optionally, the early status transfer information indicates a data radio bearer (data radio bearer, DRB) identifier for performing early data transfer and a count value corresponding to a 1^{st} downlink data packet for performing early data transfer in a DRB. The count value is formed by a (packet data convergence protocol, PDCP) sequence number (sequence number, SN) and a superframe number.

105: The source base station performs early data transfer to the candidate base station.

The source base station transfers, to the candidate base station, a downlink data packet that is not correctly received by the UE currently, for example, transfers the downlink data packet in a form of a PDCP service data unit (service data unit, SDU), and may carry a PDCP SN corresponding to each PDCP SDU.

The source base station always allocates a PDCP SN to a downlink PDCP SDU until the source base station sends SN status transfer information to a target base station (that is, after the UE accesses the candidate cell in step 109, the source base station initiates data transfer).

A purpose of early data transfer is to reduce a data transmission latency in a handover process, that is, after the UE accesses the candidate cell, the candidate cell may send, to the UE, downlink data that has been transferred by the source base station. Otherwise, the source base station can initiate downlink data transfer only after the source base station learns that the UE accesses the candidate cell, and then the candidate cell can send the downlink data to the UE. In other words, the early data transfer can shorten a sending latency of the downlink data packet.

An execution sequence of step 103, step 104, and step 105 is not limited. In addition, step 104 and step 105 are optional.

106: The source base station may further additionally send early data transfer information to the candidate base station between step 104 and step 109.

The early data transfer information indicates the candidate base station to discard some PDCP SDUs that have been transferred. For example, the early data transfer information carries a downlink count value, and the count value indicates that the candidate base station needs to discard a PDCP SDU whose count value is less than the count value in the previously transferred PDCP SDUs. If the candidate base station has not attempted to send these transferred PDCP SDUs to the UE, the candidate base station does not send the PDCP SDU whose count value is less than the count value to the UE.

107: The UE accesses the candidate cell that meets the trigger condition.

When the UE determines that a trigger condition of a specific candidate cell is met, the UE accesses the candidate cell. When trigger conditions of a plurality of candidate cells are met, the UE selects one of the candidate cells to initiate random access. In this embodiment of this application, a candidate cell that meets a trigger condition may be referred to as a target cell, and a base station corresponding to the target cell may be referred to as a target base station.

For example, in FIG. 1, a specific candidate cell of the candidate base station 1 meets a trigger condition, and UE accesses the candidate cell. The candidate base station 1 is the target base station.

108: The candidate base station 1 sends handover success information to the source base station. Correspondingly, the source base station receives the handover success information from the candidate base station 1.

The handover success information indicates that the UE has successfully accessed the candidate base station 1. Optionally, the handover success information may carry an identifier of a candidate cell that the UE currently accesses.

When the candidate cell learns that the UE successfully accesses the candidate cell, a base station corresponding to the candidate cell, for example, the candidate base station 1 in FIG. 1, sends the handover success information to the source base station. Optionally, the candidate cell may send the downlink data to the UE based on latest early status transfer information and the downlink data of the early data transfer.

109: The source base station sends sequence number status transfer information to the candidate base station 1. Correspondingly, the candidate base station 1 receives the sequence number status transfer information from the source base station.

The sequence number status transfer information carries an identifier (for example, a DRB ID) of a DRB whose data is to be transferred and uplink status information and/or downlink status information corresponding to each DRB. The downlink status information may include one downlink count value, and the count value is a downlink count value that needs to be allocated by the candidate base station 1 to a next data packet to which no PDCP SN is allocated. The uplink status information may include an uplink count value, and the count value is a count value corresponding to a 1^{st} uplink PDCP SDU that is not correctly received by the source base station. The uplink status information may further include indication information indicating whether each data packet after the count value is correctly received. For example, the indication information may be represented by using a bit string. A value of a 1^{st} bit in the bit string indicates whether a 1^{st} data packet after the count value is correctly received, and a value of an N^{th} bit indicates whether an N^{th} data packet after the count value is correctly received.

110: The source base station performs late data transfer to the candidate base station 1.

The late data transfer is data transfer performed by the source base station to the candidate base station 1 after the UE accesses the candidate cell. The data transfer may include uplink data transfer and/or downlink data transfer.

### (2) Conditional primary secondary cell addition (CPA) and conditional primary secondary cell addition (CPC)

The CPA is a condition-based primary secondary cell (primary secondary cell, PSCell) addition solution, and there is no need to wait for the UE to report a measurement report before delivering a new PSCell configuration to the UE, so that a latency of adding a PSCell can be shortened. The CPC is a condition-based PSCell change solution, and there is no need to wait for the UE to report a measurement report before delivering a new PSCell configuration to the UE, so that a latency of changing a PSCell can be shortened. The CPA may also separately improve robustness of adding the PSCell. The CPC may also improve robustness of changing the PSCell. For example, in a scenario in which the CPC is triggered by an SN, a case in which a measurement report cannot be reported and a reconfiguration message cannot be delivered through a signaling radio bearer (signaling radio bearer, SRB) 3 due to a rapid change of signal quality of the PSCell can be avoided, so that robustness of changing the PSCell can be improved.

A basic principle of the CPA or the CPC may be as follows: A network side pre-configures a plurality of candidate PSCells, and the network side notifies the UE of configurations of these candidate PSCells and a trigger condition corresponding to each candidate PSCell. When determining that a trigger condition of a specific candidate PSCell is met, the UE may directly access the candidate PSCell.

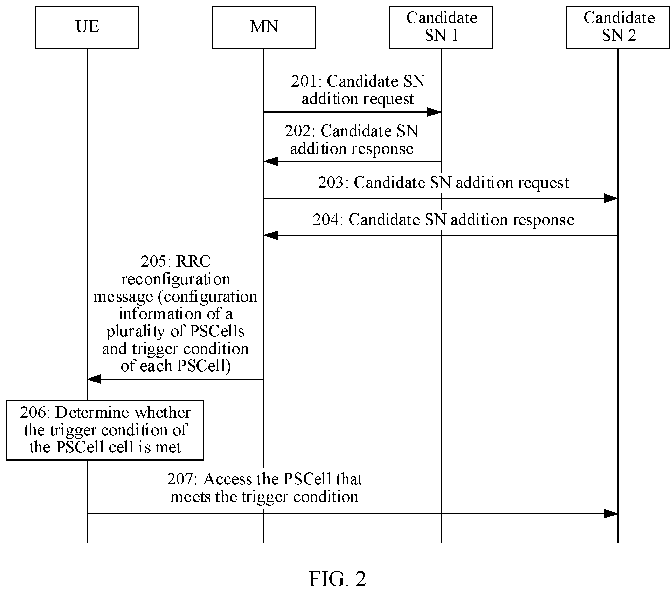

For example, refer to a schematic flowchart of CPA triggered by an MN shown in FIG. 2. The procedure shown in FIG. 2 may include the following steps.

201: The MN sends a candidate SN addition request to a candidate SN 1. Correspondingly, the candidate SN 1 receives the candidate SN addition request from the MN.

The candidate SN addition request is used to request to add a candidate SN. Optionally, the candidate SN addition request includes one or more candidate PSCell identifiers requested by the MN from the candidate SN 1.

202: The candidate SN 1 sends a candidate SN addition response to the MN. Correspondingly, the MN receives the candidate SN addition response from the candidate SN 1.

The candidate SN addition response is used to respond to the candidate SN addition request. The candidate SN addition response may carry configuration information of one or more PSCells. Optionally, the one or more PSCells may be PSCells in the candidate SN. Optionally, the one or more PSCells may be requested by the MN, that is, correspond to the PSCell identifiers carried in the candidate SN addition request.

203: The MN sends a candidate SN addition request to a candidate SN 2. Correspondingly, the candidate SN 2 receives the candidate SN addition request from the MN. Optionally, the candidate SN addition request includes one or more candidate PSCell identifiers requested by the MN from the candidate SN 2.

204: The candidate SN 2 sends a candidate SN addition response to the MN. Correspondingly, the MN receives the candidate SN addition response from the candidate SN 2.

The candidate SN addition response is used to respond to the candidate SN addition request. The candidate SN addition response may carry configuration information of one or more PSCells of the candidate SN 2. Optionally, the one or more PSCells may be PSCells in the candidate SN. Optionally, the one or more PSCells may be requested by the MN, that is, correspond to the PSCell identifiers carried in the candidate SN addition request.

205: The MN sends an RRC reconfiguration message to the UE. Correspondingly, the UE receives the RRC reconfiguration message from the MN.

The RRC reconfiguration message may include configuration information of a plurality of PSCells and a trigger condition of each PSCell. The configuration information of the plurality of PSCells may be from the candidate SN 1 and the candidate SN 2. The trigger condition of each PSCell is determined by the MN.

206: The UE determines whether the trigger condition of the PSCell cell is met.

When receiving the RRC reconfiguration message, the UE determines whether each PSCell meets a respective trigger condition, and trigger conditions of different PSCells may be different.

207: The UE accesses the PSCell that meets the trigger condition. For example, in FIG. 2, that the PSCell that meets the trigger condition is a cell of the candidate SN 2 is used as an example.

When a trigger condition of a specific PSCell is met, the UE sends an RRC message to the MN, and the RRC message carries indication information. The indication information indicates that the trigger condition of the PSCell of the UE is met. In other words, the indication information indicates that the PSCell of the UE meets the trigger condition of the PSCell.

After step 202 and step 204, the MN may perform early data transfer to the candidate SN 1 and the candidate SN 2.

A CPC procedure is similar to a CPA procedure. Compared with the CPA procedure, the CPC procedure includes a procedure of disconnecting from a source PSCell. The CPC is divided into CPC triggered by the MN and CPC triggered by a source SN. For the CPC triggered by the MN, the MN determines the candidate PSCell and the trigger condition of each candidate PSCell. For the CPC triggered by the source SN, the source SN determines the candidate PSCell and the trigger condition of each candidate PSCell. The source SN sends, through the MN, a CPC request to an access network device corresponding to the candidate PSCell. For example, the source SN sends an SN change requirement message (where the SN change requirement message carries the candidate PSCell identifier and the trigger condition of each candidate PSCell) to the MN, and then the MN sends an SN addition request message (where the SN addition request message carries the candidate PSCell identifier) to the access network device corresponding to the candidate PSCell. For specific descriptions, refer to descriptions in 3GPP TS 37.340.

### 3. Application layer measurement

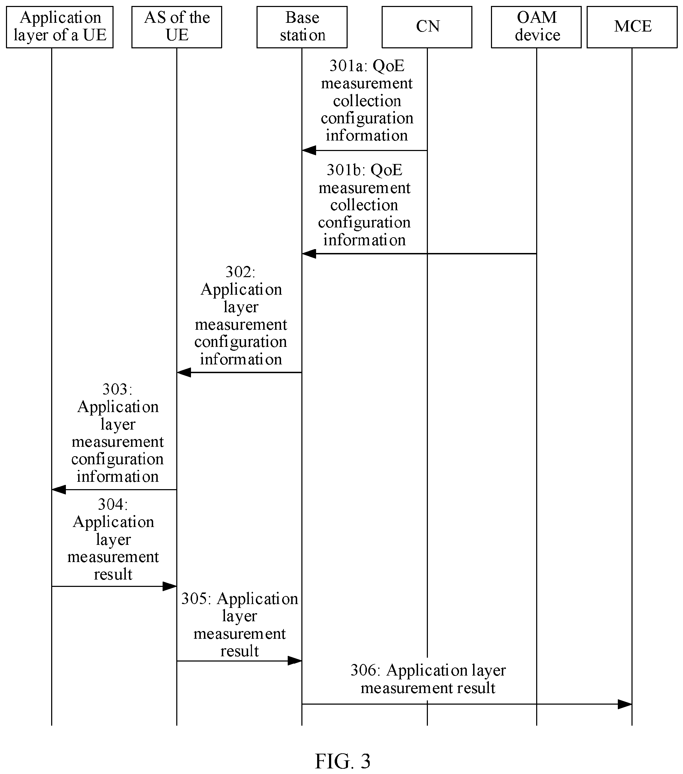

The application layer measurement may also be described as QoE measurement, and is used to measure user experience of some services. For example, some streaming-type services or voice services, for example, a streaming service (streaming service) and an MTSI streaming service. In a scenario in which one UE communicates with one base station, for a procedure of the application layer measurement, refer to FIG. 3. The procedure of the application layer measurement shown in FIG. 3 may include the following steps.

301a: A base station obtains QoE measurement collection configuration information from a core network.

The base station obtains the QoE measurement collection configuration information from the core network (core network, CN), and is configuration information corresponding to signaling-based application layer measurement.

For example, the QoE measurement collection configuration information includes a container (container), the container includes an application layer measurement configuration, and further the container may be referred to as an application layer measurement configuration container.

The QoE measurement collection configuration information may further include application layer reference information, namely, a QoE reference. The QoE reference identifies the application layer measurement requested by the network, or identifies an application layer measurement collection task between the base station and a measurement collection entity (measurement collection entity, MCE). The QoE reference is a globally unique identifier. For example, the QoE reference is formed by a mobile country code (mobile country code, MCC)+mobile network code (mobile network code, MNC)+QoE measurement collection (QoE measurement collection, QMC) identifier (identifier, ID). The MCC and the MNC identify a public land mobile network (public land mobile network, PLMN) including a management system together with a trace activation request from the management system. The QMC ID is allocated by the management system or an operator.

The QoE measurement collection configuration information may further include a service type, and is used to describe a service type of the application layer measurement.

The QoE measurement collection configuration information may further include a collection range of the application layer measurement. The collection range may be further divided into a cell-based range, a tracking area-based range, a tracking area identifier-based range, and a PLMN-based range.

The QoE measurement collection configuration information may further include an IP address of the MCE. The MCE is used to receive an application layer measurement report. The IP address of the MCE is used by the base station to send a corresponding measurement result to the MCE in a form of a report after the base station receives the measurement result reported by the UE.

The QoE measurement collection configuration information may further include application layer measurement indicators that are perceivable to the base station, namely, available RAN visible QoE metrics. These application layer measurement indicators may include one or more of the following:
- average throughput, where the indicator indicates a total quantity of bits received by an application layer of the UE in a measurement interval;
- initial playing latency, where the indicator indicates an initial playing latency when a streaming medium starts to be displayed, for example, may be defined as from a moment at which a first segment of the medium is obtained to a moment at which the streaming medium is extracted from a buffer of a client;
- buffer level, where the indicator indicates duration in which media data can be further played starting from a current playing moment;
- playing latency, where the indicator indicates a playing latency when a streaming medium is started, for example, may be defined as a latency from time when a dynamic adaptive streaming over hypertext transfer protocol (dynamic adaptive streaming over HTTP, DASH) player receives a play/back/start instruction to time when the medium is played;
- deterioration duration, where the indicator indicates a time interval between Nepal time (Nepal time, NPT) corresponding to a previous high-quality frame and NPT corresponding to a subsequent high-quality frame before deterioration, for example, a high-quality frame is a frame that is completely accepted, and all parts of a picture corresponding to the frame include content to be obtained, or the frame is a new frame (that is, does not depend on any previously decoded frame);
- quantity of consecutive lost packets, where the indicator indicates a quantity of consecutive lost real-time transport protocol (real-time transport protocol, RTP) packets;
- jitter duration, where jitter indicates that a difference between an actual playing moment and an expected playing moment of a frame exceeds a threshold, for example, an expected moment of a frame is a playing moment of a previous playing frame+(a time difference between NPT of a current frame and NPT of the previous playing frame);
- out-of-synchronization duration, where out-of-synchronization indicates that an absolute time difference between a value A and a value B exceeds a specific threshold, where the value A is a difference between a playing moment of a previous playing frame of a video stream and a playing moment of a previous playing frame of a voice stream; and the value B is a difference between an expected playing moment of a previous playing frame of a video stream and an expected playing moment of a previous playing frame of a voice stream;
- round-trip latency, where the indicator indicates round-trip time at an RTP level and an additional latency in two directions (an RTP level->a speaker->a microphone->an RTP level) caused by buffering and other processing in a client;
- average bit rate, where the indicator indicates a bit rate at which valid media information is encoded in a measurement periodicity;
- comparable quality viewport switching latency (comparable quality viewport switching latency), where the indicator reports a latency and a quality-related factor when quality deteriorates due to viewport switching; and the quality-related factor includes a quality ranking value (quality ranking value), a resolution, and the like;
- freezing, where the indicator indicates whether freezing occurs in a video stream playing process or duration of freezing.

Perceivable means that the base station can interpret received information, and perceivable may be replaced with visible, learnable, accessible, detectable, extractable, or the like. This is not limited in this embodiment of this application.

After learning or perceiving that the UE measures the foregoing application layer measurement indicators, the base station may indicate the UE to report measurement results of the application layer measurement indicators that are perceivable to the base station. For example, the base station indicates the UE to report measurement results of application layer measurement indicators that are perceivable to which base stations, or the base station indicates the UE to report measurement results of application layer measurement indicators that are perceivable to a base station as specified in a protocol.

Optionally, measurement configuration information of the application layer measurement may not be sent to the base station in a form of a container, but is sent to the base station in a form that is perceivable to the base station.

301b: The base station obtains the QoE measurement collection configuration information from an OAM device.

The base station obtains the QoE measurement collection configuration information from the OAM device, and the QoE measurement collection configuration information is configuration information corresponding to management-based application layer measurement. The management-based application layer measurement may also be that the base station obtains the QoE measurement collection configuration information from element management (element management, EM). For the QoE measurement collection configuration information, refer to the specific descriptions of the QoE measurement collection configuration information in step 301a. Details are not described herein again.

Step 301a and step 301b are two parallel implementations.

Step 301a and step 301b are optional. For example, the base station may generate measurement configuration information of the application layer measurement based on a requirement of the base station.

302: The base station sends the application layer measurement configuration information to the UE. Correspondingly, the UE receives the application layer measurement configuration information from the base station.

For the signaling-based application layer measurement, the base station sends the application layer measurement configuration information to the UE. The application layer measurement configuration information includes a part or all of the QoE measurement collection configuration information. For example, the base station sends an application layer measurement configuration container, a service type, and the like in the QoE measurement collection configuration information to the UE. Optionally, the base station determines, depending on whether the UE supports the application layer measurement, whether to configure the application layer measurement for the UE.

For the management-based application layer measurement, the base station selects an appropriate UE to perform the application layer measurement based on some other factors such as QoE measurement collection configuration information sent by the OAM device or the EM and whether the UE supports the QoE measurement collection configuration information. After selecting the UE, the base station sends the application layer measurement configuration information to the UE. The application layer measurement configuration information includes a part or all of the QoE measurement collection configuration information. For example, the base station sends an application layer measurement configuration, a service type, and the like in the QoE measurement collection configuration information to the UE.

The base station may send the application layer measurement configuration information to the UE by using an RRC message. It should be noted that, in this application, the application layer measurement configuration information is specifically an application layer measurement configuration that is sent by the base station to the UE to indicate the UE to report an application layer measurement result that is not perceivable to the base station, unless otherwise specified.

Optionally, the base station may also send measurement configuration information that is perceivable to the base station to the UE, to indicate the UE to report some application layer measurement indicators in a form that is perceivable to the base station. For the application layer measurement indicators, refer to the specific descriptions in step 301a. Details are not described herein again. The application layer measurement indicator may further include a comprehensive score of one application layer measurement indicator, a comprehensive score of an access layer indicator, a comprehensive score of a comprehensive application layer measurement indicator and an access layer indicator, an indicator indicating quality of an application layer indicator, or the like. Optionally, the measurement configuration information that is perceivable to the base station and the application layer measurement configuration information may be carried in a same RRC message, or may be carried in different RRC messages. For example, the base station first sends, to the UE, an RRC message carrying the application layer measurement configuration information, and then sends, to the UE, an RRC message carrying the measurement configuration information that is perceivable to the base station.

Optionally, the base station may further send an application layer measurement identifier to the UE. The application layer measurement identifier may be generated by the base station for the UE, and corresponds to one application layer measurement configured by the base station for the UE. Usually, there is a correspondence, for example, a one-to-one correspondence, between the application layer measurement identifier and the QoE reference. The base station may store the correspondence between the application layer measurement identifier and the QoE reference.

303: An access stratum (access stratum, AS) of the UE sends the application layer measurement configuration information to an upper layer of the AS of the UE, for example, an application layer of the UE. In FIG. 3, the application layer of the UE is used as an example.

The upper layer of the AS of the UE may be the application layer of the UE, or may be a layer for performing the application layer measurement.

The AS of the UE sends the application layer measurement configuration information obtained by the AS from the base station to the upper layer of the AS of the UE.

The upper layer of the AS of the UE performs the application layer measurement based on the application layer measurement configuration information.

Optionally, the AS of the UE may further send the measurement configuration information that is perceivable to the base station to the upper layer of the AS of the UE. Optionally, the AS of the UE may further send the application layer measurement identifier to the upper layer of the AS of the UE.

For example, the AS of the UE may send the foregoing information to the upper layer of the AS of the UE in a manner referred to as an attention (attention, AT) command (command).

304: The upper layer of the AS of the UE sends an application layer measurement result to the AS of the UE.

The upper layer of the AS of the UE reports the application layer measurement result to the AS of the UE according to a specific rule (where for example, the rule may be included in the application layer measurement configuration container in the application layer measurement configuration information). For example, the upper layer of the AS of the UE periodically reports the application layer measurement result. For another example, the upper layer of the AS of the UE can report the application layer measurement result only after one session ends.

It should be noted that, in this application, the application layer measurement result is specifically the application layer measurement result that is not perceivable to the base station, unless otherwise specified.

Optionally, in addition to reporting an application layer measurement result corresponding to the application layer measurement configuration information, the upper layer of the AS of the UE may further report a measurement result corresponding to the measurement configuration information that is perceivable to the base station.

Optionally, the upper layer of the AS of the UE may further report an application layer measurement identifier corresponding to the application layer measurement result.

Optionally, when a specific application layer measurement has started, the upper layer of the AS of the UE sends indication information to the AS of the UE, to indicate that the application layer measurement has started. Similarly, when a specific application layer measurement ends, the upper layer of the AS of the UE sends the indication information to the AS of the UE, to indicate that the application layer measurement has ended.

For example, the upper layer of the AS of the UE may send the foregoing information to the AS of the UE in an AT command manner.

305: The AS of the UE sends the application layer measurement result to the base station. Correspondingly, the base station receives the application layer measurement result of the AS from the UE.

For example, the AS of the UE includes the application layer measurement result in an uplink RRC message, and sends the uplink RRC message to the base station. The application layer measurement result may be sent to the base station in a form of a container, or may be sent to the base station in a form of a non-container.

Optionally, the AS of the UE may further send, to the base station, the measurement result corresponding to the measurement configuration information that is perceivable to the base station (which may be an application layer measurement result that is perceivable to the base station for short).

Optionally, the AS of the UE may further send, to the base station, the application layer measurement identifier corresponding to the application layer measurement result.

Optionally, the base station that delivers the application layer measurement configuration information or the measurement configuration information that is perceivable to the base station and the base station that receives the application layer measurement result or the measurement result corresponding to the measurement configuration information that is perceivable to the base station may be different (where for example, the base station is replaced due to mobility), or may be the same.

306: The base station sends the application layer measurement result to the MCE. Correspondingly, the MCE receives the application layer measurement result from the base station.

The base station sends the application layer measurement result to the MCE. For example, the base station obtains, based on the stored correspondence between the application layer measurement identifier and the QoE reference and the application layer measurement identifier reported by the UE, the QoE reference corresponding to the application layer measurement result. Further, the base station finds the IP address of the corresponding MCE based on the QoE reference, and sends the application layer measurement result to the MCE. Alternatively, the base station obtains the corresponding measurement configuration information based on the application layer measurement identifier reported by the UE, to obtain the IP address of the MCE corresponding to the application layer measurement result, and send the application layer measurement result to the MCE.

Optionally, the base station may optimize a radio resource based on the measurement result that is reported by the UE and that corresponds to the measurement configuration information that is perceivable to the base station. For example, when a measurement result of a specific application layer measurement indicator is not ideal, the base station may allocate more resources to the UE, or increase a scheduling priority or the like of the UE.

The following describes a system architecture to which this application is applied.

This application may be applied to a 5th generation (5th generation, 5G) system, which may also be referred to as a new radio (new radio, NR) system; may be applied to a 6th generation (6th generation, 6G) system, a 7th generation (7th generation, 7G) system, or another future communication system; or may be further applied to a device-to-device (device-to-device, D2D) system, a machine-to-machine (machine-to-machine, M2M) system, a vehicle to everything (vehicle to everything, V2X) system, or the like.

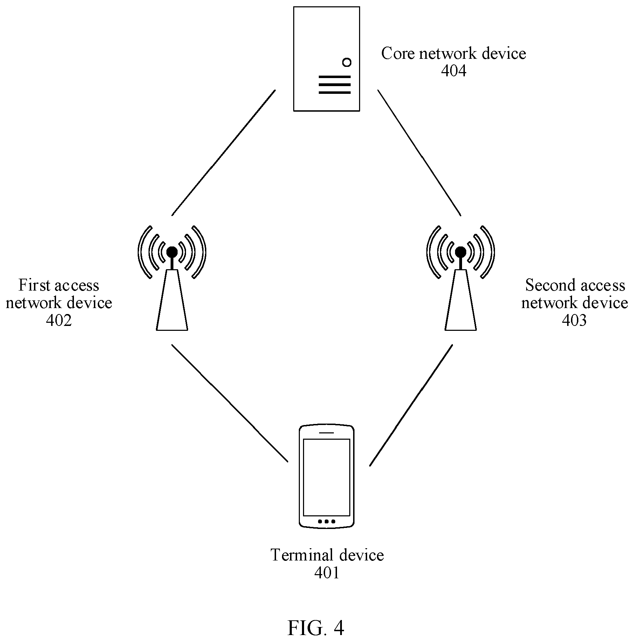

For example, FIG. 4 is a diagram of a system architecture to which an embodiment of this application is applied. The system architecture shown in FIG. 4 may include a terminal device 401, a first access network device 402, a second access network device 403, and a core network device 404. A quantity and forms of devices shown in FIG. 4 are used as an example, and do not constitute a limitation on this embodiment of this application. For example, during actual application, a plurality of terminal devices 401 may be included.

The terminal device is also referred to as a UE, a mobile station (mobile station, MS), a mobile terminal (mobile terminal, MT), or the like, and is a device that provides voice and/or data connectivity for a user, for example, a handheld device or a vehicle-mounted device having a wireless connection function. Currently, some examples of the terminal device are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like. In this application, an apparatus configured to implement a function of the terminal device may be a terminal device, or may be an apparatus, for example, a chip system, that can support the terminal device in implementing the function. The apparatus may be installed in the terminal device, or may be used in combination with the terminal device. In this application, the chip system may include a chip, or may include a chip and another discrete component. In the technical solutions provided in this application, an example in which the apparatus configured to implement the function of the terminal device is a UE is for describing the technical solutions provided in this application.

The access network device may also be referred to as a network device and is a radio access network (radio access network, RAN) node (or device) through which the terminal device accesses a wireless network, and may also be referred to as a base station. Currently, some examples of the RAN node are as follows: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a wireless fidelity (wireless fidelity, Wi-Fi) access point (access point, AP), and the like. In addition, in a network structure, an access network device may include a central unit (central unit, CU) node, a distributed unit (distributed unit, DU) node, or a RAN device including a CU node and a DU node. The RAN device including the CU node and the DU node splits protocol layers of an eNB in a long term evolution (long term evolution, LTE) system. Functions of some protocol layers are centrally controlled by a CU, functions of some or all of remaining protocol layers are distributed in a DU, and the CU centrally controls the DU. In this application, an apparatus configured to implement a function of the access network device may be an access network device, or may be an apparatus, for example, a chip system, that can support the access network device in implementing the function. The apparatus may be installed in the access network device or used in combination with the access network device. In this application, the chip system may include a chip, or may include a chip and another discrete component. In the technical solutions provided in this application, the technical solutions provided in this application are described by using an example in which the apparatus configured to implement the function of the access network device is the access network device.

The core network device is a device, in a core network (CN), that provides service support for the terminal device. Currently, some examples of the core network device are as follows: an access and mobility management function (access and mobility management function, AMF) entity, a session management function (session management function, SMF) entity, and a user plane function (user plane function, UPF) entity, which are not enumerated herein. The AMF entity may be responsible for access management and mobility management of the terminal device. The SMF entity may be responsible for session management, for example, user session establishment. The UPF entity may be a functional entity on a user plane, and is mainly responsible for connecting to an external network. It should be noted that, an entity in this application may also be referred to as a network element or a functional entity. For example, the AMF entity may also be referred to as an AMF network element or an AMF functional entity. For another example, the SMF entity may also be referred to as an SMF network element or an SMF functional entity.

In this embodiment of this application, the first access network device 402 is a primary access network device in an MR-DC scenario, namely, a master base station. The second access network device 403 is a secondary access network device in the MR-DC scenario, namely, a secondary base station.

In a secondary cell group (secondary cell group, SCG) release (release) scenario or a scenario in which an MN cell is fully configured, the system architecture shown in FIG. 4 includes the terminal device 401, the first access network device 402, and the second access network device 403.

In an SCG release and addition (release and add) scenario, the second access network device in the system architecture shown in FIG. 4 may be further used as a secondary access network device newly added in SCG release and addition. In an SN change scenario, the system architecture shown in FIG. 4 may further include a third access network device, the third access network device may be used as a target secondary access network device, and the second access network device may be used as a source access network device. It should be noted that, in the SN change scenario, SCG release and addition may also occur.

The following describes in detail the application layer measurement method provided in embodiments of this application. In this embodiment of this application, an example in which the first access network device is an MN, the second access network device is an SN, and the terminal device is a UE is used.

Currently, in an SCG release scenario, the SN cannot send an RRC reconfiguration message to the UE, and the MN sends SCG release information to the UE. When the UE receives the SCG release information, the UE usually releases all content previously configured by the SN. Therefore, how the UE determines whether to release an application layer measurement configured by the SN for the UE is an urgent technical problem to be resolved.

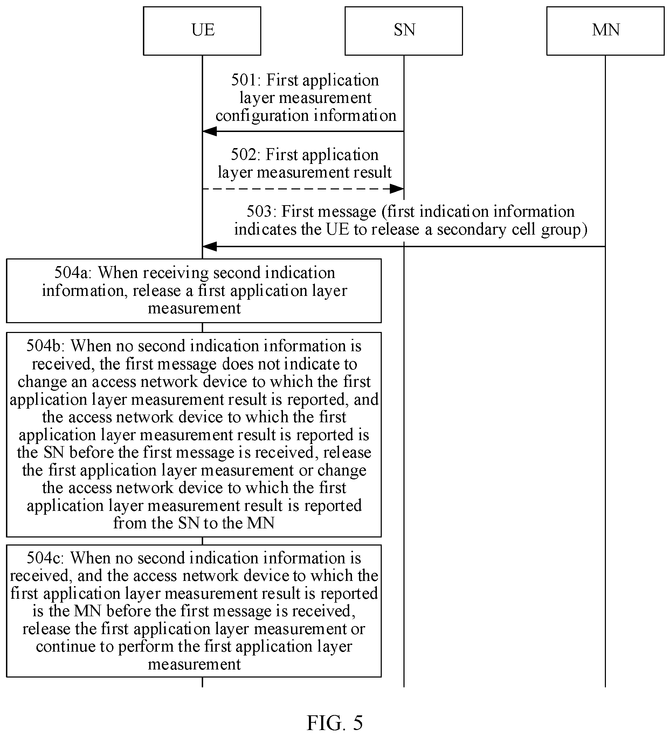

In view of this, FIG. 5 is a schematic flowchart of an application layer measurement method according to an embodiment of this application. The method may include but is not limited to the following steps.

501: An SN sends first application layer measurement configuration information to a UE. Correspondingly, the UE receives the first application layer measurement configuration information from the SN.

The first application layer measurement configuration information is used to configure a first application layer measurement. The SN may obtain QoE measurement collection configuration information from a core network device, an OAM device, or an MN, and the first application layer measurement configuration information sent by the SN to the UE may be a part or all of the QoE measurement collection configuration information.

Optionally, the first application layer measurement configuration information may include an application layer measurement identifier of the first application layer measurement.

Optionally, the first application layer measurement configuration information may further include a service type of the first application layer measurement.

Optionally, the first application layer measurement configuration information may further include indication information, and the indication information indicates a specific access network device to which the UE reports a first application layer measurement result corresponding to the first application layer measurement configuration information. For example, the indication information indicates the UE to report the first application layer measurement result to the SN.

When receiving the first application layer measurement configuration information, an AS of the UE sends the first application layer measurement configuration information to an upper layer of the AS of the UE. When receiving the first application layer measurement configuration information, the upper layer of the AS of the UE performs the first application layer measurement based on the first application layer measurement configuration information, and obtains the first application layer measurement result. The upper layer of the AS of the UE may send the first application layer measurement result to the AS of the UE.

Optionally, the SN may further send, to the UE, measurement configuration information that is perceivable to a base station. When receiving the measurement configuration information that is perceivable to the base station, the AS of the UE sends the measurement configuration information that is perceivable to the base station to the upper layer of the AS of the UE. When receiving the measurement configuration information that is perceivable to the base station, the upper layer of the AS of the UE performs perceivable measurement based on the measurement configuration information that is perceivable to the base station, and obtains a measurement result that is perceivable to the base station. The upper layer of the AS of the UE may send, to the AS of the UE, the measurement result that is perceivable to the base station.

Optionally, 502: The UE sends the first application layer measurement result to the SN. Correspondingly, the SN receives the first application layer measurement result from the UE.

When receiving the first application layer measurement result, the AS of the UE sends the first application layer measurement result to the SN. Optionally, the UE may further send, to the SN, an application layer measurement identifier corresponding to the first application layer measurement result. Optionally, the UE may further send, to the SN, the measurement result corresponding to the measurement configuration information that is perceivable to the base station.

Step 502 is optional. The UE may perform step 502 after performing step 501, or may not perform step 502 before performing a subsequent step (for example, step 503).

In addition, step 502 may alternatively be replaced with that the UE sends the first application layer measurement result to the MN. Correspondingly, the MN receives the first application layer measurement result from the UE. For example, before step 502, the MN or the SN sends the indication information to the UE, to indicate the UE to report, to the MN, the first application layer measurement result corresponding to the first application layer measurement.

503: The MN sends a first message to the UE. Correspondingly, the UE receives the first message from the MN.

The first message carries first indication information, and the first indication information indicates the UE to release a secondary cell group. Optionally, the first indication information may be SCG release information, and may indicate the UE to release the secondary cell group.

504a: When receiving second indication information, the UE releases the first application layer measurement. It may be understood that the first message may further carry the second indication information, and the second indication information indicates the UE to release the first application layer measurement. In this case, when receiving the second indication information, the UE releases the first application layer measurement. In other words, when receiving the second indication information, the UE releases the first application layer measurement delivered by the SN, or releases the first application layer measurement configuration information delivered by the SN, or stops the first application layer measurement.

504b: When the UE receives no second indication information, the first message does not indicate to change an access network device to which the first application layer measurement result is reported, and the access network device to which the first application layer measurement result is reported is the SN before the first message is received, the UE releases the first application layer measurement or changes the access network device to which the first application layer measurement result is reported from the SN to the MN. It may be understood that when the first message supports carrying the second indication information but the MN does not send the second indication information in the first message (that is, the UE does not receive the second indication information), the first message does not indicate the UE to change the access network device to which the first application layer measurement result is reported, and the access network device to which the first application layer measurement result is reported is the SN before the first message is received, the UE releases the first application layer measurement or changes the access network device to which the first application layer measurement result is reported from the SN to the MN.

In other words, when the first message does not indicate the UE to release the first application layer measurement, and does not indicate the UE to change the access network device to which the first application layer measurement result is reported, and the access network device to which the first application layer measurement result is reported is the SN before the first message is received, the UE may release the first application layer measurement or change the access network device to which the first application layer measurement result is reported from the SN to the MN.

Optionally, when the first message does not indicate the UE to release the first application layer measurement, and the access network device to which the first application layer measurement result is reported is the SN before the first message is received, the UE may change the access network device to which the first application layer measurement result is reported from the SN to the MN.

Optionally, when the first message does not indicate the UE to change the access network device to which the first application layer measurement result is reported, and the access network device to which the first application layer measurement result is reported is the SN before the first message is received, the UE may release the first application layer measurement.

504c: When the UE receives no second indication information, and the access network device to which the first application layer measurement result is reported is the MN before the first message is received, the UE releases the first application layer measurement or continues to perform the first application layer measurement. It may be understood that when the first message supports carrying the second indication information but the MN does not send the second indication information in the first message (that is, the UE does not receive the second indication information), and the access network device to which the first application layer measurement result is reported is the MN before the first message is received, the UE releases the first application layer measurement or continues to perform the first application layer measurement.

In other words, when the first message does not indicate the UE to release the first application layer measurement, and the access network device to which the first application layer measurement result is reported is the MN before the first message is received, the UE may release the first application layer measurement or continue to perform the first application layer measurement.

For example, the first message may be an RRC reconfiguration message. The RRC reconfiguration message may indicate the UE to release the secondary cell group. Further, the RRC reconfiguration message may further indicate the UE to release the first application layer measurement. Alternatively, the RRC reconfiguration message may further indicate to change the access network device to which the first application layer measurement result is reported.

In an implementation, before sending the first message to the UE, the MN may determine whether to retain a first application layer measurement configuration. In other words, the MN may determine whether to retain the first application layer measurement configuration information, or whether to retain a first application layer measurement task.

When determining to retain the first application layer measurement configuration, and that an access network device to which the first application layer measurement result is currently reported is the SN, the MN sends the first message to the UE, where the first message indicates the UE to change the access network device to which the first application layer measurement result is reported. Further, the UE may change, based on the first message, the access network device to which the first application layer measurement result is reported, for example, from the SN to the MN. The access network device to which the first application layer measurement result is currently reported may be understood as the access network device to which the first application layer measurement result is reported before the first message is sent. In this way, the UE may continue to perform the first application layer measurement, so that collecting, by a network side, a measurement result of the first application layer measurement is not affected.

When determining not to retain the first application layer measurement configuration, the MN sends the first message to the UE, where the first message indicates the UE to release the first application layer measurement. In other words, the first message carries the second indication information, and the second indication information indicates the UE to release the first application layer measurement.

Optionally, before sending the first message to the UE, the MN may determine, based on first application layer measurement information sent by the SN, whether to retain the first application layer measurement configuration. For example, the SN includes the first application layer measurement information in an SN release request acknowledgment (namely, SN release request acknowledge) message or an SN release required (SN release required) message sent to the MN. The first application layer measurement information may include but is not limited to one or more of the following information: the application layer measurement identifier of the first application layer measurement, reference information of the first application layer measurement, address information of a measurement collection entity corresponding to the first application layer measurement, effective area information corresponding to the first application layer measurement, and the access network device to which the first application layer measurement result is currently reported. For the application layer measurement identifier, the reference information, and the effective area information, refer to the specific descriptions in FIG. 3. Details are not described herein again. The address information of the measurement collection entity is an IP address of the MCE. How the MN determines, based on the first application layer measurement information, whether to retain the first application layer measurement configuration is not limited in this embodiment of this application.

Optionally, before sending the first message to the UE, the MN may determine, based on a radio resource, whether to retain the first application layer measurement configuration. For example, if the MN considers that a current radio resource is limited, the MN may determine not to retain the first application layer measurement configuration.

Optionally, before sending the first message to the UE, the MN may determine, based on the radio resource and the first application layer measurement information that is sent by the SN, whether to retain the first application layer measurement configuration.

In the embodiment shown in FIG. 5, in the SCG release scenario, the MN may indicate the UE to release the first application layer measurement delivered by the SN, or change the access network device to which the first application layer measurement result is reported, or continue the first application layer measurement. Alternatively, the UE may determine to release the first application layer measurement delivered by the SN, or change the access network device to which the first application layer measurement result is reported, or continue the first application layer measurement. This helps improve efficiency of collecting the application layer measurement result.

In an optional embodiment, when determining that the first application layer measurement result is not correctly received by the SN, the UE reports the first application layer measurement result to the MN. This embodiment may be performed when the UE receives the first indication information indicating to release the secondary cell group, and the UE changes the access network device to which the first application layer measurement result is reported from the SN to the MN.

For example, when the AS of the UE receives the first application layer measurement result from the upper layer of the AS of the UE, and the UE has sent, to the SN, an RRC message carrying the first application layer measurement result or has generated an RRC message carrying the first application layer measurement result, but the UE determines that the RRC message or a segment of the RRC message is not correctly received by the SN, the UE reports the first application layer measurement result to the MN, or the UE resends, to the MN, the RRC message corresponding to the first application layer measurement result or all segments of the RRC message. Then, the MN sends the first application layer measurement result to the MCE. In this way, the network side can receive the complete application layer measurement result. It should be noted that this embodiment may be implemented independently from the method for how the UE determines whether to change the access network device to which the first application layer measurement result is reported from the SN to the MN when the UE receives the first indication information indicating to release the secondary cell group in the embodiment described in FIG. 5. This is not limited in this application.

Further, when determining that the first application layer measurement result is not correctly received by the SN, that the UE reports the first application layer measurement result to the MN may be extended to as follows: When determining that a specific application layer measurement result is not correctly received by an old base station, the UE sends the application layer measurement result to a new base station, so that the new base station can receive the complete application layer measurement result.

In an optional embodiment, the UE may receive a second message, where the second message is used to configure CHO or CPA or CPC, and the second message includes a trigger condition of each candidate cell in at least one candidate cell. The second message may be from the MN. The UE determines a target cell from the at least one candidate cell based on the trigger condition of each candidate cell in the at least one candidate cell, where a trigger condition of the target cell is met. In other words, the UE selects, from the at least one candidate cell, the target cell that meets the trigger condition. Further, the UE sends measurement status information of the first application layer measurement to an access network device corresponding to the target cell, where the measurement status information of the first application layer measurement includes start indication information, and the start indication information indicates whether the first application layer measurement is started.

Optionally, the start indication information may indicate that the first application layer measurement has been started or is not started. Optionally, the start indication information may indicate that the first application layer measurement has been started. Optionally, the start indication information may indicate that the first application layer measurement is not started. In other words, the start indication information may indicate whether the first application layer measurement is started, or may indicate only that the first application layer measurement has been started, or may indicate only that the first application layer measurement is not started.

Further, the measurement status information of the first application layer measurement further includes one or more of the following information: the application layer measurement identifier of the first application layer measurement, the reference information of the first application layer measurement, and end indication information of the first application layer measurement, and the end indication information indicates whether the first application layer measurement ends. Optionally, the end indication information may indicate whether the first application layer measurement ends, or may indicate only that the first application layer measurement has ended, or may indicate only that the first application layer measurement does not end.

Currently, in an SCG addition and release scenario, the UE first performs an SCG release process, and then performs an SCG addition process. There may also be a technical problem the same as that in the SCG release scenario. For example, in an SN change scenario, when a target SN does not understand configuration information sent by a source SN to the UE (where for example, a version of the target SN is earlier than a version of the source SN, and therefore the configuration information delivered by the source SN to the UE cannot be understood), the target SN indicates the MN to use a full configuration manner for the configuration information of the source SN, and the RRC reconfiguration message sent by the MN to the UE carries SCG release and add indication information. Consequently, the UE does not know how to process the application layer measurement configured by the source SN for the UE. In addition, in an SN change scenario in a non-SCG addition and release scenario, how to specifically negotiate between the MN and the SN whether to retain the application layer measurement configured by the source SN for the UE and which specific node sends, to the UE, the application layer measurement configured by the source SN for the UE to be retained or released or changes a reporting node reporting these application layer measurement configurations is also a problem to be resolved.

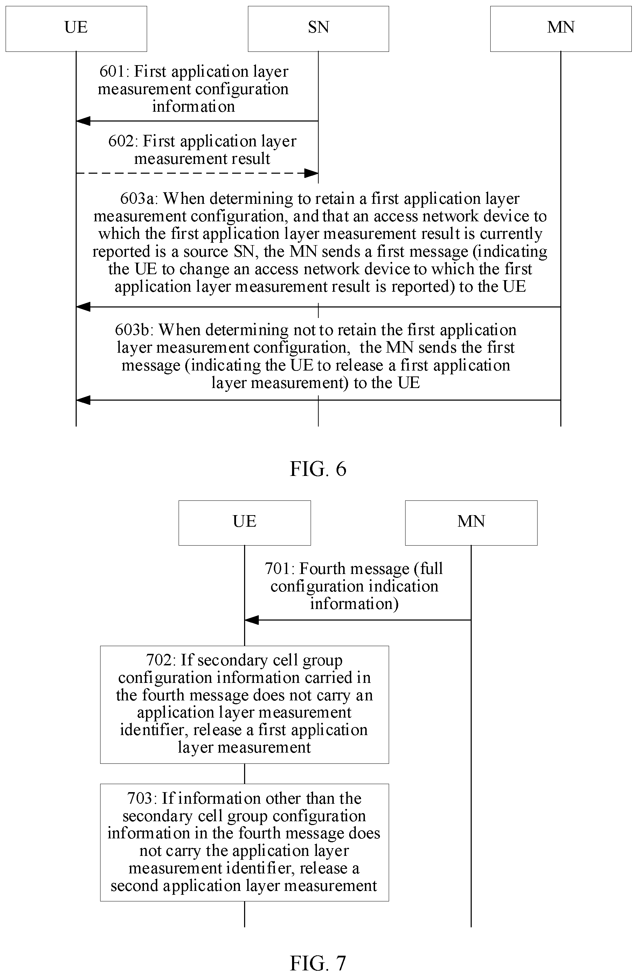

In view of this, FIG. 6 is a schematic flowchart of another application layer measurement method according to an embodiment of this application. The method may include but is not limited to the following steps.

601: A source SN sends first application layer measurement configuration information to a UE. Correspondingly, the UE receives the first application layer measurement configuration information from the source SN.

Optionally, 602: The UE sends a first application layer measurement result to the source SN. Correspondingly, the source SN receives the first application layer measurement result from the UE.

Optionally, step 602 may alternatively be that the UE sends the first application layer measurement result to an MN. Correspondingly, the MN receives the first application layer measurement result from the UE.

For an implementation process of step 601 and step 602, refer to the specific descriptions of step 501 and step 502 in the embodiment shown in FIG. 5. Details are not described herein again.

603a: When determining to retain a first application layer measurement configuration, and that an access network device to which the first application layer measurement result is currently reported is the source SN, the MN sends a first message to the UE. Correspondingly, the UE receives the first message from the MN.

The first message indicates the UE to change an access network device to which the first application layer measurement result is reported, for example, to change from the source SN to the MN; or for another example, to change from the source SN to a target SN.

If the MN determines to change the access network device to which the first application layer measurement result is reported from the source SN to the target SN, the MN further sends a third message to the target SN, where the third message is used to request the UE to send the first application layer measurement result to the target SN. For example, the MN includes, in an SN addition request (SN addition request) message sent to the target SN, information for requesting the UE to send the first application layer measurement result to the target SN.

Optionally, further, the target SN indicates, in an SN addition request acknowledgment (SN addition request acknowledge) message sent to the MN, an application layer measurement that has been accepted by the target SN. For example, the SN addition request message carries information for requesting the UE to send the first application layer measurement result to the target SN, and the SN addition request acknowledgment message may indicate that the request has been accepted by the target SN or a first application layer measurement has been accepted by the target SN. In this case, the UE may send the first application layer measurement result to the target SN.

For the UE, when receiving the first message indicating to change the access network device to which the first application layer measurement result is reported, the UE changes the access network device to which the first application layer measurement result is reported, for example, to change from the source SN to the MN; or for another example, to change from the source SN to the target SN.

603b: When determining not to retain the first application layer measurement configuration, the MN sends the first message to the UE. Correspondingly, the UE receives the first message from the MN.

The first message indicates the UE to release the first application layer measurement.

For the UE, when receiving the first message indicating to release the first application layer measurement, the UE releases the first application layer measurement.

Optionally, before sending the first message to the UE, the MN may determine, based on first application layer measurement information sent by the source SN, whether to retain the first application layer measurement configuration. For example, the source SN includes the first application layer measurement information in the SN release request acknowledge message or an SN release required message sent to the MN. The first application layer measurement information may include but is not limited to one or more of the following information: an application layer measurement identifier of the first application layer measurement, reference information of the first application layer measurement, address information of a measurement collection entity corresponding to the first application layer measurement, effective area information corresponding to the first application layer measurement, and the access network device to which the first application layer measurement result is currently reported. For the application layer measurement identifier, the reference information, and the effective area information, refer to the specific descriptions in FIG. 3. Details are not described herein again. The address information of the measurement collection entity is an IP address of the MCE. How the MN determines, based on the first application layer measurement information, whether to retain the first application layer measurement configuration is not limited in this embodiment of this application.

Optionally, before sending the first message to the UE, the MN may determine, based on a radio resource, whether to retain the first application layer measurement configuration. For example, if the MN considers that a current radio resource is limited, the MN may determine not to retain the first application layer measurement configuration.

Optionally, before sending the first message to the UE, the MN may determine, based on the radio resource and the first application layer measurement information that is sent by the SN, whether to retain the first application layer measurement configuration.

In the embodiment shown in FIG. 6, in an SCG release and addition scenario, the MN may indicate the UE to release the first application layer measurement delivered by the source SN, or change the access network device to which the first application layer measurement result is reported. This helps improve efficiency of collecting the application layer measurement result.

In an optional embodiment, in an SN change scenario, the target SN may indicate the UE to release the first application layer measurement delivered by the source SN, or change the access network device to which the first application layer measurement result is reported. The MN may send, to the target SN, the first application layer measurement information received by the MN from the source SN.

When determining, based on the first application layer measurement information, to change the access network device to which the first application layer measurement information is reported, and that the access network device to which the first application layer measurement result is currently reported is the source SN, the target SN sends first information to the UE, where the first information indicates the UE to change the access network device to which the first application layer measurement result is reported, for example, to change from the source SN to the MN; or for another example, to change from the source SN to the target SN.

If the target SN determines to change the access network device to which the first application layer measurement result is reported from the source SN to the MN, the target SN includes, in the SN addition request acknowledgment (SN addition request acknowledge) message sent to the MN, a request for requesting the UE to send the first application layer measurement result to the MN.

Optionally, further, the target SN further indicates, in the SN addition request acknowledgment message sent to the MN, an application layer measurement that has been accepted by the target SN. For an application layer measurement that is not accepted by the target SN, the MN may determine whether to indicate the UE to retain the application layer measurement.

For the UE, when receiving, from the target SN, first information indicating to change the access network device to which the first application layer measurement result is reported, the UE changes the access network device to which the first application layer measurement result is reported, for example, to change from the source SN to the MN; or for another example, to change from the source SN to the target SN.

When determining, based on the first application layer measurement information, to release the first application layer measurement, the target SN sends the first information to the UE, where the first information indicates the UE to release the first application layer measurement. For the UE, when receiving the first information indicating to release the first application layer measurement, the UE releases the first application layer measurement.

In an optional embodiment, in an SN change scenario, the MN sends the first message to the UE, where the first message carries first indication information, and the first indication information indicates to release and add a secondary cell group. When receiving second indication information, the UE releases the first application layer measurement, and the second indication information indicates the UE to release the first application layer measurement. Alternatively, the UE determines, in response to the first indication information, whether to release the first application layer measurement when releasing the secondary cell. Both the second indication information and the first indication information may be carried in the first message.

Further, when the first message further carries secondary cell group configuration information, and the secondary cell group configuration information carries third indication information, the UE determines to retain the first application layer measurement, where the third indication information indicates the UE to retain the first application layer measurement. The secondary cell group configuration information is used to configure a new secondary cell group.

Alternatively, when the first message further carries secondary cell group configuration information, and the secondary cell group configuration information carries fourth indication information, the UE releases the first application layer measurement, where the fourth indication information indicates the UE to release the first application layer measurement. The secondary cell group configuration information is used to configure a new secondary cell group.

Further, the third indication information further indicates the UE to adjust the access network device to which the first application layer measurement result is reported from the source SN to the MN, so that the UE adjusts the access network device to which the first application layer measurement result is reported from the source SN to the MN.

In other words, when receiving a secondary cell group SCG release and addition message, the UE does not release the first application layer measurement when performing SCG release. Whether the UE releases the first application layer measurement depends on whether the secondary cell group configuration information indicates the UE to release the first application layer measurement, or whether the secondary cell group configuration information indicates the UE to change the access network device to which the application layer measurement result is reported.

In an optional embodiment, when determining that the first application layer measurement result is not correctly received by the source SN, the UE reports the first application layer measurement result to the MN, or reports the first application layer measurement result to the target SN.

For example, when an AS of the UE receives the first application layer measurement result from an upper layer of the AS of the UE, and before the SN is changed, the UE has sent, to the source SN, an RRC message carrying the first application layer measurement result or has generated an RRC message carrying the first application layer measurement result, but the UE determines that the RRC message or a segment of the RRC message is not correctly received by the source SN, if the UE changes to report the first application layer measurement result to the MN after handover, the UE reports the first application layer measurement result to the MN, or the UE resends, to the MN, the RRC message corresponding to the first application layer measurement result or all segments of the RRC message. Then, the MN sends the first application layer measurement result to the MCE. In this way, the network side can receive the complete application layer measurement result. It should be noted that this example may be implemented independently from the method for how to indicate the UE whether to change the access network device to which the first application layer measurement result is reported from the SN to the MN in the SN change scenario in the embodiment described in FIG. 6. This is not limited in this application.

For example, when an AS of the UE receives the first application layer measurement result from an upper layer of the AS of the UE, and before the SN is changed, the UE has sent, to the source SN, an RRC message carrying the first application layer measurement result or has generated an RRC message carrying the first application layer measurement result, but the UE determines that the RRC message or a segment of the RRC message is not correctly received by the source SN, if the UE changes to report the first application layer measurement result to the target SN after handover, the UE reports the first application layer measurement result to the target SN, or the UE resends, to the target SN, the RRC message corresponding to the first application layer measurement result or all segments of the RRC message. Then, the target SN sends the first application layer measurement result to the MCE. In this way, the network side can receive the complete application layer measurement result. It should be noted that this example may be implemented independently from the method for how to indicate the UE whether to change the access network device to which the first application layer measurement result is reported from the source SN to the target SN in the SN change scenario in the embodiment described in FIG. 6. This is not limited in this application.

In an optional embodiment, the UE may receive a second message, where the second message is used to configure CHO or CPA or CPC, and the second message includes a trigger condition of each candidate cell in at least one candidate cell. The second message may be from the MN. The UE determines a target cell from the at least one candidate cell based on the trigger condition of each candidate cell in the at least one candidate cell, where a trigger condition of the target cell is met. In other words, the UE selects, from the at least one candidate cell, the target cell that meets the trigger condition. Further, the UE sends measurement status information of the first application layer measurement to an access network device corresponding to the target cell, where the measurement status information of the first application layer measurement includes start indication information, and the start indication information indicates whether the first application layer measurement is started.

Optionally, the start indication information may indicate that the first application layer measurement has been started or is not started. Optionally, the start indication information may indicate that the first application layer measurement has been started. Optionally, the start indication information may indicate that the first application layer measurement is not started. In other words, the start indication information may indicate whether the first application layer measurement is started, or may indicate only that the first application layer measurement has been started, or may indicate only that the first application layer measurement is not started.

Further, the measurement status information of the first application layer measurement further includes one or more of the following information: the application layer measurement identifier of the first application layer measurement, the reference information of the first application layer measurement, and end indication information of the first application layer measurement, and the end indication information indicates whether the first application layer measurement ends. Optionally, the end indication information may indicate whether the first application layer measurement ends, or may indicate only that the first application layer measurement has ended, or may indicate only that the first application layer measurement does not end.

For a case in which the SN does not change in the SCG release and addition scenario, there are the following implementations.

In an implementation, the SN may send indication information to the UE, to indicate the UE to release the first application layer measurement, or change the access network device to which the first application layer measurement result is reported. When receiving the secondary cell group SCG release and addition message, the UE does not release the first application layer measurement when performing SCG release. Whether the UE releases the first application layer measurement depends on whether the secondary cell group configuration information indicates the UE to release the first application layer measurement, or whether the secondary cell group configuration information indicates the UE to change the access network device to which the application layer measurement result is reported.

In another implementation, the SN sends the first application layer measurement information to the MN, and the MN determines, based on the first application layer measurement information, whether to retain the first application layer measurement configuration. When the MN determines to retain the first application layer measurement configuration, and that the access network device to which the first application layer measurement result is currently reported is the SN, the MN includes, in an SN modification confirm (SN modification confirm) message sent to the SN, a request requesting the UE to send the first application layer measurement result to the MN. For the UE, the UE indicates, based on an RRC reconfiguration message delivered by the MN, whether to release the first application layer measurement, or whether to change the access network device to which the first application layer measurement result is reported.

Currently, for a scenario in which a full configuration (full configuration) occurs in an MN cell, if a command sent by the MN to the UE does not carry any application layer measurement identifier, the UE releases all application layer measurements. As a result, the application layer measurement delivered by the SN is also released, affecting collection of the application layer measurement result.

In view of this, FIG. 7 is a schematic flowchart of still another application layer measurement method according to an embodiment of this application. The method may include but is not limited to the following steps.

701: An MN sends a fourth message to a UE. Correspondingly, the UE receives the fourth message from the MN.

The fourth message carries full configuration indication information, namely, full configuration indication information.

702: If secondary cell group configuration information carried in the fourth message does not carry an application layer measurement identifier, the UE releases a first application layer measurement.

If the secondary cell group configuration information does not carry the application layer measurement identifier, for example, an RRC reconfiguration message delivered by an SN does not carry any application layer measurement identifier, that is, the secondary cell group configuration information is the RRC reconfiguration message delivered by the SN, the UE releases an application layer measurement delivered by the SN before the fourth message of the MN is received. In other words, whether the UE releases the application layer measurement delivered by the SN depends on whether the RRC reconfiguration message delivered by the SN carries the application layer measurement identifier. If the message does not carry any application layer measurement identifier, the UE releases all application layer measurements delivered by the SN. The first application layer measurement corresponds to the application layer measurement configured by the SN before the fourth message of the MN is received. The fourth message carries the secondary cell group configuration information. The RRC reconfiguration message delivered by the SN is an RRC reconfiguration message generated by the SN. The SN may send the RRC reconfiguration message to the MN, and then the MN sends the RRC reconfiguration message to the UE.

703: If information other than the secondary cell group configuration information in the fourth message does not carry the application layer measurement identifier, release a second application layer measurement.

The second application layer measurement corresponds to second application layer measurement configuration information of the MN. In other words, if the information other than the secondary cell group configuration information in the fourth message does not carry any application layer measurement identifier, the UE may release the application layer measurement delivered by the MN, that is, release the application layer measurement configured by the MN before the fourth message of the MN is received.

Optionally, the fourth message sent by the MN includes two RRC reconfiguration messages. One RRC reconfiguration message is from the SN. The RRC reconfiguration message includes the secondary cell group configuration information. If the secondary cell group configuration information does not carry any application layer identifier, the UE releases all the application layer measurements delivered by the SN. The other RRC reconfiguration message is generated by the MN. The RRC reconfiguration message includes the full configuration indication information. If the RRC reconfiguration message does not carry any application layer identifier, the UE releases the application layer measurement configured by the MN before the fourth message of the MN is received. Usually, the RRC reconfiguration message generated by the MN carries the RRC reconfiguration message generated by the SN, and then the MN sends the two RRC reconfiguration messages to the UE.

In the embodiment shown in FIG. 7, when the secondary cell configuration information carried in the fourth message does not carry any application layer measurement identifier, the UE releases the application layer measurement delivered by the SN.

The embodiment shown in FIG. 7 may be performed independently, or performed in combination with the embodiment shown in FIG. 5, or performed in combination with the embodiment shown in FIG. 6.

Currently, in a scenario in which a network side configures CHO or CPA or CPC for a UE, it takes a period of time for the UE to access an access network device corresponding to a target cell. During this period, measurement status information at an application layer may change. If the access network device corresponding to the target cell does not obtain latest measurement status information, the access network device corresponding to the target cell may incorrectly consider that a specific application layer measurement is not started.

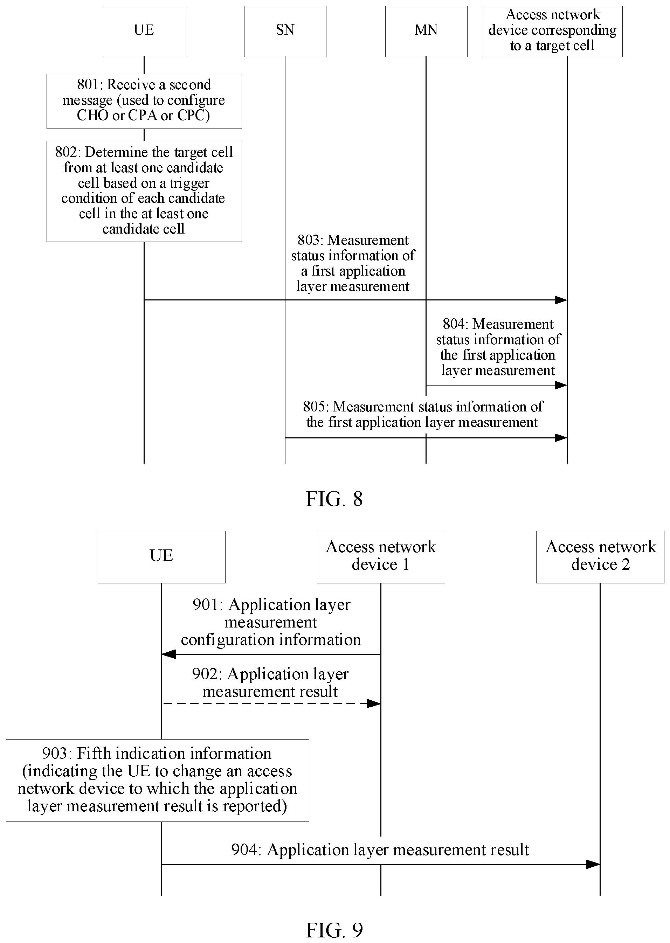

In view of this, FIG. 8 is a schematic flowchart of still another application layer measurement method according to an embodiment of this application. The method may include but is not limited to the following steps.

801: A UE receives a second message, where the second message is used to configure CHO or CPA or CPC.

The second message includes a trigger condition of each candidate cell in at least one candidate cell. The second message may be from an MN.

802: The UE determines a target cell from the at least one candidate cell based on the trigger condition of each candidate cell in the at least one candidate cell, where a trigger condition of the target cell is met.

803: The UE sends measurement status information of a first application layer measurement to the access network device corresponding to the target cell. Correspondingly, the access network device corresponding to the target cell receives the measurement status information of the first application layer measurement from the UE.

The measurement status information of the first application layer measurement includes start indication information, and the start indication information indicates whether the first application layer measurement is started. The measurement status information of the first application layer measurement may further include other information. For details, refer to the descriptions of the measurement status information of the first application layer measurement in the foregoing embodiment. Details are not described herein again.

804: When CHO or CPA or CPC has been configured for the UE and a trigger condition of the target cell is met, the MN sends the measurement status information of the first application layer measurement to the access network device corresponding to the target cell.

That the CHO has been configured for the UE may be that the MN has configured the CHO for the UE. That the CPA has been configured for the UE may be that the MN has configured the CPA for the UE. That the CPC has been configured for the UE may be that the MN has configured the CPC (which may also be understood as CPC triggered by the MN) for the UE, or may be that an SN has configured the CPC (which may also be understood as CPC triggered by the SN) for the UE.

805: When the CPC has been configured for the UE and the trigger condition of the target cell is met, a source SN sends the measurement status information of the first application layer measurement to the access network device corresponding to the target cell.

In step 803, the UE sends the measurement status information of the first application layer measurement to the access network device corresponding to the target cell. In step 804, the MN sends the measurement status information of the first application layer measurement to the access network device corresponding to the target cell. In step 805, the source SN sends the measurement status information of the first application layer measurement to the access network device corresponding to the target cell. Step 803, step 804, and step 805 do not all need to be performed. Optionally, for the CPC triggered by the SN, in step 805, the source SN may first send the measurement status information of the first application layer measurement to the MN, and then the MN sends the measurement status information of the first application layer measurement to the access network device corresponding to the target cell.

The access network device corresponding to the target cell is different from that of the MN, and is also different from that of the source SN.

In the embodiment shown in FIG. 8, the UE, the MN, or the source SN may send the measurement status information of the first application layer measurement to the access network device corresponding to the target cell, so that the access network device corresponding to the target cell may learn of the latest measurement status information.

In the embodiment shown in FIG. 8, that the CHO or the CPA or the CPC is configured is used as an example. This embodiment of this application may be further applied to another scenario in which the UE delays accessing the target cell. In other words, this embodiment of this application may be further applied to any scenario in which the target cell allocates a resource to the UE in advance, but the UE needs to delay accessing the target cell. In these scenarios, the UE, the MN, or the source SN may send the latest measurement status information of the application layer measurement to the access network device corresponding to the target cell.

Currently, when an access network device to which an application layer measurement result is reported is changed, how the UE processes a previous application layer measurement result that is not successfully sent to an old base station is a technical problem to be resolved.

In view of this, FIG. 9 is a schematic flowchart of still another application layer measurement method according to an embodiment of this application. The method may include but is not limited to the following steps.

901: An access network device 1 sends application layer measurement configuration information to a UE. Correspondingly, the UE receives the application layer measurement configuration information from the access network device 1.

For an implementation process of step 901, refer to the descriptions of step 501 in the embodiment shown in FIG. 5. The access network device 1 may be an SN or an MN.

Optionally, 902: The UE sends an application layer measurement result to the access network device 1. Correspondingly, the access network device 1 receives the application layer measurement result from the UE.

For an implementation process of step 902, refer to the descriptions of step 502 in the embodiment shown in FIG. 5.

Optionally, step 902 may alternatively be replaced with that the UE sends an application layer measurement result to an access network device 2. For example, the access network device 1 or the access network device 2 indicates the UE to send the application layer measurement result to the access network device 2. The access network device 1 is different from the access network device 2. The access network device 2 may be an SN or an MN.

Optionally, if the access network device 1 is the SN, step 902 may be replaced with that the UE sends the application layer measurement result to the MN.

903: The UE receives fifth indication information, where the fifth indication information indicates the UE to change the access network device to which the application layer measurement result is reported.

Optionally, the UE receives the fifth indication information from the access network device 1 or the access network device 2.

Optionally, the UE may receive the fifth indication information from the MN. For example, in an SCG release scenario, the MN may indicate the UE to change the access network device to which the application layer measurement result is reported. For another example, due to another reason, the MN (for example, the access network device 1) expects the UE to report the application layer measurement result to the SN (for example, the access network device 2).

Optionally, the UE may receive the fifth indication information from a target SN. For example, in an SN change scenario, the target SN may indicate the UE to change the access network device to which the application layer measurement result is reported. For another example, due to another reason, the target SN (for example, the access network device 1) expects the UE to report the application layer measurement result to the MN (for example, the access network device 2).

Optionally, the UE may receive the fifth indication information from the SN. For example, in an SCG release and addition scenario, the SN does not change, and the SN may indicate the UE to change the access network device to which the application layer measurement result is reported. For another example, due to another reason, the SN (for example, the access network device 1) expects the UE to report the application layer measurement result to the MN (for example, the access network device 2).

904: The UE sends the application layer measurement result to the access network device 2. Correspondingly, the access network device 2 receives the application layer measurement result from the UE.

When determining that the application layer measurement result is not correctly received by the access network device 1, the UE reports the application layer measurement result to the access network device 2.

For example, when determining that the application layer measurement result is not correctly received by the SN, the UE reports the application layer measurement result to the MN. For the process, refer to the specific descriptions of the process in the foregoing embodiment. Details are not described herein again.

For example, when determining that the application layer measurement result is not correctly received by the source SN, the UE reports the application layer measurement result to the MN. For the process, refer to the specific descriptions of the process in the foregoing embodiment. Details are not described herein again.

For example, when determining that the application layer measurement result is not correctly received by the source SN, the UE reports the application layer measurement result to the target SN. For the process, refer to the specific descriptions of the process in the foregoing embodiment. Details are not described herein again.

For example, when determining that the application layer measurement result is not correctly received by the MN, the UE reports the application layer measurement result to the SN. For the process, refer to the specific descriptions of the process in the foregoing embodiment. Details are not described herein again.

In the embodiment shown in FIG. 9, when determining that a specific application layer measurement result is not correctly received by an old base station, the UE sends the application layer measurement result to a new base station, so that the new base station can receive the complete application layer measurement result.

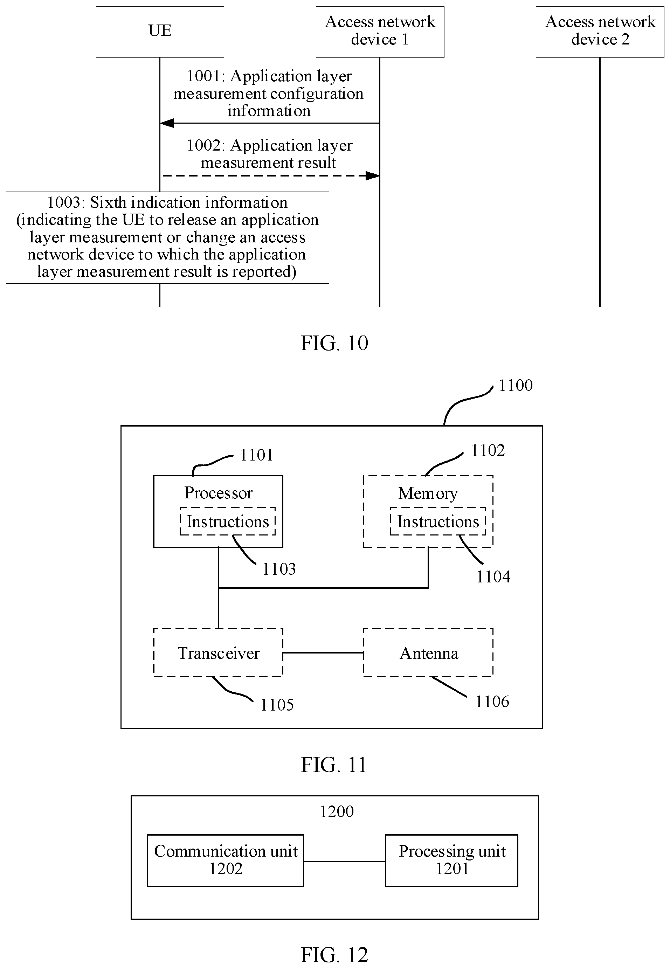

FIG. 10 is a schematic flowchart of still another application layer measurement method according to an embodiment of this application. The method may include but is not limited to the following steps.

1001: An access network device 1 sends application layer measurement configuration information to a UE. Correspondingly, the UE receives the application layer measurement configuration information from the access network device 1.

For an implementation process of step 1001, refer to the descriptions of step 501 in the embodiment shown in FIG. 5. The access network device 1 may be an SN or an MN.

Optionally, 1002: The UE sends an application layer measurement result to the access network device 1. Correspondingly, the access network device 1 receives the application layer measurement result from the UE.

For an implementation process of step 1002, refer to the descriptions of step 502 in the embodiment shown in FIG. 5.

Optionally, step 1002 may alternatively be replaced with that the UE sends an application layer measurement result to an access network device 2. For example, the access network device 1 or the access network device 2 indicates the UE to send the application layer measurement result to the access network device 2. The access network device 1 is different from the access network device 2. The access network device 2 may be an SN or an MN.

Optionally, if the access network device 1 is the SN, step 1002 may be replaced with that the UE sends the application layer measurement result to the MN.

1003: The UE receives sixth indication information, where the sixth indication information indicates the UE to release an application layer measurement or change an access network device to which the application layer measurement result is reported.

In an implementation, the UE receives the sixth indication information from the MN. In other words, regardless of whether the application layer measurement configuration information is delivered by the MN or the SN, the MN indicates the UE to release the application layer measurement or change the access network device to which the application layer measurement result is reported. If the access network device 1 in step 1001 is the SN, the SN may send request information to the MN, to request to change the access network device to which the application layer measurement result is reported. Optionally, before the MN sends the sixth indication information, the SN sends request information to the MN, to request to release the application layer measurement or change the access network device to which the application layer measurement result is reported. The request information may further carry one or more of the following information: an application layer measurement identifier of the application layer measurement, reference information of the application layer measurement, address information of a measurement collection entity corresponding to the application layer measurement, effective area information corresponding to the application layer measurement, and an access network device to which the application layer measurement result is currently reported. For these pieces of information, refer to the specific descriptions in the foregoing embodiment. Details are not described herein again.

In another implementation, an access network device that previously sends the application layer measurement configuration information to the UE or an access network device that previously receives the application layer measurement result sends the sixth indication information to the UE. The access network device that previously sends the application layer measurement configuration information to the UE is an access network device that sends the application layer measurement configuration information to the UE before sending the sixth indication information. The access network device that previously receives the application layer measurement result is an access network device that receives the application layer measurement result corresponding to the application layer measurement configuration information before sending the sixth indication information.

For example, if the access network device that previously sends the application layer measurement configuration information to the UE is the SN, the SN sends the sixth indication information to the UE, to indicate the UE to change the access network device to which the application layer measurement result is reported.

For another example, if the access network device that previously receives the application layer measurement result is the SN, the SN sends the sixth indication information to the UE, to indicate the UE to change the access network device to which the application layer measurement result is reported.

In still another implementation, the MN negotiates with the SN to determine the access network device that sends the sixth indication information to the UE, and the access network device sends the sixth indication information to the UE. For example, the MN sends request information to the SN, to request to change the access network device to which the application layer measurement result is reported, and requests the SN to send the sixth indication information to the UE, and the sixth indication information indicates the UE to change the access network device to which the application layer measurement result is reported. The request information may further carry one or more of the following information: an application layer measurement identifier of the application layer measurement, reference information of the application layer measurement, address information of a measurement collection entity corresponding to the application layer measurement, effective area information corresponding to the application layer measurement, and an access network device to which the application layer measurement result is currently reported. For these pieces of information, refer to the specific descriptions in the foregoing embodiment. Details are not described herein again.

The foregoing three implementations are used as examples, and do not constitute a limitation on this embodiment of this application.

In the embodiment shown in FIG. 10, in an MR-DC scenario, the sixth indication information may indicate the UE to release the application layer measurement or change the access network device to which the application layer measurement result is reported.

The foregoing method embodiments may be performed independently, or may be performed in combination with another method embodiment. For example, the embodiment shown in FIG. 5 may be combined with the embodiment shown in FIG. 9.

Corresponding to the method provided in the foregoing method embodiments, embodiments of this application further provide a corresponding apparatus. The apparatus includes a corresponding module configured to perform the foregoing embodiments. The module may be software, hardware, or a combination of software and hardware.

FIG. 11 is a diagram of a structure of a communication apparatus. The communication apparatus 1100 may be a terminal device, may be a chip, a chip system, a processor, or the like that supports the terminal device in implementing the foregoing method. Alternatively, the communication apparatus 1100 may be an access network device, or may be a chip, a chip system, a processor, or the like that supports the access network device in implementing the foregoing method. The access network device may be a first access network device, a second access network device, or a third access network device. The apparatus may be configured to implement the method described in the foregoing method embodiments. For details, refer to the descriptions in the foregoing method embodiments.

The communication apparatus 1100 may include one or more processors 1101. The processor 1101 may also be referred to as a processing unit, a processing module, or the like, and may implement a control function. The processor 1101 may be a general-purpose processor, a dedicated processor, or the like. The general-purpose processor may be, for example, a central processing unit, and the dedicated processor may be, for example, a baseband processor. The baseband processor may be configured to process a communication protocol and communication data. The central processing unit may be configured to: control a communication apparatus (for example, a base station, a baseband chip, an MT, a DU, or a CU), execute a software program, and process data of the software program.

In an optional design, the processor 1101 may also store instructions 1103, and the instructions 1103 may be run by the processor 1101, so that the communication apparatus 1100 performs the method described in the foregoing method embodiments.

In another optional design, the processor 1101 may include a transceiver unit configured to implement receiving and sending functions. For example, the transceiver unit may be a transceiver circuit or an interface. The transceiver circuit, the interface, or an interface circuit configured to implement the receiving and sending functions may be separated, or may be integrated together. The transceiver circuit or the interface may be configured to read and write instructions, or the transceiver circuit or the interface may be configured to perform signal transmission.

Optionally, the communication apparatus 1100 may include one or more memories 1102. The memory 1102 may store instructions 1104, and the instructions 1104 may be run on the processor 1101, so that the communication apparatus 1100 performs the method described in the foregoing method embodiments. Optionally, the memory 1102 may further store data. Optionally, the processor 1101 may also store instructions and/or data. The processor 1101 and the memory 1102 may be disposed separately, or may be integrated together. For example, the correspondence described in the foregoing method embodiments may be stored in the memory 1102 or stored in the processor 1101.

Optionally, the communication apparatus 1100 may further include a transceiver 1105 and/or an antenna 1106. The transceiver 1105 may be referred to as a transceiver unit, a transceiver machine, a transceiver circuit, a transceiver apparatus, a transceiver module, or the like, and is configured to implement a transceiver function.

Optionally, in this embodiment of this application, when the communication apparatus 1100 is a terminal device, the communication apparatus 1100 may include various functional modules, configured to perform the steps performed by the UE in the method embodiments.

Optionally, in this embodiment of this application, when the communication apparatus 1100 is a first access network device, the communication apparatus 1100 may include various functional modules, configured to perform the steps performed by the MN in the method embodiments.

Optionally, in this embodiment of this application, when the communication apparatus 1100 is a second access network device, the communication apparatus 1100 may include various functional modules, configured to perform the steps performed by the SN in the method embodiments.

Optionally, in this embodiment of this application, when the communication apparatus 1100 is a third access network device, the communication apparatus 1100 may include various functional modules, configured to perform the steps performed by the target SN in the method embodiments.

Optionally, in this embodiment of this application, when the communication apparatus 1100 is an access network device corresponding to a target cell, the communication apparatus 1100 may include various functional modules, configured to perform the steps performed by the access network device corresponding to the target cell in the method embodiments.

The processor and the transceiver described in this application may be implemented on an integrated circuit (integrated circuit, IC). The IC may include an analog IC, a radio frequency integrated circuit RFIC, a mixed-signal IC, an application-specific integrated circuit (application-specific integrated circuit, ASIC), or the like. A printed circuit on a printed circuit board (printed circuit board, PCB) may implement the IC.

As shown in FIG. 12, another embodiment of this application provides a communication apparatus 1200. The apparatus may be a terminal device; or may be a component (for example, an integrated circuit or a chip) in the terminal device. The apparatus may be an access network device, or may be a component (for example, an integrated circuit or a chip) in the access network device. Alternatively, the apparatus may be another communication module, configured to implement the method in the method embodiments of this application. The communication apparatus 1200 may include a processing unit 1201 (or referred to as a processing module). Optionally, the communication apparatus may further include a communication unit 1202 (or referred to as a transceiver unit, or a receiving unit and/or a sending unit). Optionally, the communication apparatus may further include a storage unit (or referred to as a storage module).

In a possible design, one or more units in FIG. 12 may be implemented by one or more processors, or may be implemented by one or more processors and memories, or may be implemented by one or more processors and transceivers, or may be implemented by one or more processors, memories, and transceivers. This is not limited in this embodiment of this application. The processor, the memory, and the transceiver may be disposed separately, or may be integrated.

Optionally, the modules in the communication apparatus 1200 in this embodiment of this application may be configured to perform the method described in the method embodiments.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the apparatus provided in embodiments of this application may also correspondingly implement these features or functions. Details are not described herein.

A person skilled in the art may further understand that various illustrative logical blocks (illustrative logical blocks) and steps (steps) that are listed in embodiments of this application may be implemented by electronic hardware, computer software, or a combination thereof. Whether the functions are implemented by hardware or software depends on particular applications and a design requirement of the entire system. A person skilled in the art may use various methods to implement the functions for corresponding applications, but it should not be considered that the implementation goes beyond the scope of embodiments of this application.

It may be understood that, the processor in embodiments of this application may be an integrated circuit chip, and has a signal processing capability. In an implementation process, steps in the foregoing method embodiments can be implemented through a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and method described in this specification includes but is not limited to these and any memory of another proper type.

It may be understood that, "embodiment" mentioned throughout this specification means that particular features, structures, or characteristics related to this embodiment are included in at least one embodiment of this application. Therefore, embodiments in the entire specification do not necessarily mean a same embodiment. In addition, these particular features, structures, or characteristics may be combined in one or more embodiments in any appropriate manner. It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

The correspondences shown in the tables in this application may be configured, or may be predefined. Values of the information in the tables are merely examples, and other values may be configured. This is not limited in this application. When a correspondence between the information and the parameters is configured, not all the correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used.

"Predefine" in this application may be understood as "define", "predefine", "store", "pre-store", "pre-negotiate", "pre-configure", "solidify", or "pre-burn".

A person of ordinary skill in the art may understand that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person of ordinary skill in the art may understand that, for the purpose of convenient and brief description, for a detailed working process of the foregoing system, apparatuses, and units, refer to corresponding processes in the foregoing method embodiments. Details are not described herein again.

It may be understood that the system, apparatuses, and methods described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

For same or similar parts in embodiments of this application, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An application layer measurement method, comprising:
receiving, by a terminal device, a first message from a first access network device, wherein the first message carries first indication information, and the first indication information indicates the terminal device to release a secondary cell group; and
when receiving second indication information, releasing, by the terminal device, first application layer measurement, wherein the second indication information indicates the terminal device to release the first application layer measurement; or
when the terminal device receives no second indication information, the first message does not indicate the terminal device to change an access network device to which a first application layer measurement result is reported, and the access network device to which the first application layer measurement result is reported is a second access network device before the first message is received, releasing a first application layer measurement or adjusting the access network device to which the first application layer measurement result is reported from the second access network device to the first access network device, wherein the second indication information indicates the terminal device to release the first application layer measurement; and
the first application layer measurement corresponds to first application layer measurement configuration information of the second access network device, and the first application layer measurement result is a measurement result of the first application layer measurement.

2. The method according to claim 1, wherein both the first indication information and the second indication information are carried in the first message.

3. The method according to claim 1 or 2, wherein the method further comprises:
when determining that the first application layer measurement result is not correctly received by the second access network device, reporting, by the terminal device, the first application layer measurement result to the first access network device.

4. The method according to any one of claims 1 to 3, wherein the method further comprises:
receiving, by the terminal device, a second message, wherein the second message is used to configure conditional handover CHO or conditional primary secondary cell addition CPA or conditional primary secondary cell change CPC, and the second message comprises a trigger condition of each candidate cell in at least one candidate cell;
determining, by the terminal device, a target cell from the at least one candidate cell based on the trigger condition of each candidate cell in the at least one candidate cell, wherein a trigger condition of the target cell is met; and
sending, by the terminal device, measurement status information of the first application layer measurement to an access network device corresponding to the target cell, wherein the measurement status information of the first application layer measurement comprises start indication information, and the start indication information indicates whether the first application layer measurement is started.

5. The method according to claim 4, wherein the measurement status information of the first application layer measurement further comprises one or more of the following information: an application layer measurement identifier of the first application layer measurement, reference information of the first application layer measurement, and end indication information of the first application layer measurement, and the end indication information indicates whether the first application layer measurement ends.

6. An application layer measurement method, comprising:
when determining to retain a first application layer measurement configuration, and that an access network device to which a first application layer measurement result is currently reported is a second access network device, sending, by a first access network device, a first message to a terminal device, wherein the first message indicates the terminal device to change an access network device to which the first application layer measurement result is reported; or
when determining not to retain a first application layer measurement configuration, sending, by a first access network device, a first message to a terminal device, wherein the first message indicates the terminal device to release a first application layer measurement, wherein
the first application layer measurement configuration corresponds to the second access network device, and the first application layer measurement result is a measurement result of the first application layer measurement.

7. The method according to claim 6, wherein the method further comprises:
receiving, by the first access network device, first application layer measurement information from the second access network device, wherein the first application layer measurement information comprises one or more of the following information: an application layer measurement identifier of the first application layer measurement, reference information of the first application layer measurement, address information of a measurement collection entity corresponding to the first application layer measurement, effective area information corresponding to the first application layer measurement, and the access network device to which the first application layer measurement result is currently reported; and the first application layer measurement information is used to determine whether to retain the first application layer measurement configuration.

8. The method according to claim 6, wherein after determining to retain the first application layer measurement configuration, the method further comprises:
sending, by the first access network device, a third message to a target access network device, wherein the third message is used to request the terminal device to send the first application layer measurement result to the target access network device.

9. The method according to any one of claims 6 to 8, wherein the method further comprises:
when conditional primary secondary cell change CPC has been configured for the terminal device and a trigger condition of a target cell is met, sending, by the first access network device, measurement status information of the first application layer measurement to an access network device corresponding to the target cell, wherein the measurement status information of the first application layer measurement comprises start indication information, and the start indication information indicates whether the first application layer measurement is started.

10. The method according to claim 9, wherein the measurement status information of the first application layer measurement further comprises one or more of the following information: the application layer measurement identifier of the first application layer measurement, the reference information of the first application layer measurement, and end indication information of the first application layer measurement, and the end indication information indicates whether the first application layer measurement ends.

11. An application layer measurement method, comprising:
receiving, by a terminal device, a first message from a first access network device, wherein the first message carries first indication information, and the first indication information indicates to release and add a secondary cell group; and
when receiving second indication information, releasing, by the terminal device, first application layer measurement, wherein the second indication information indicates the terminal device to release the first application layer measurement; or
determining, by the terminal device in response to the first indication information, whether to release first application layer measurement when releasing the secondary cell group, wherein
the first application layer measurement corresponds to first application layer measurement configuration information of a second access network device.

12. The method according to claim 11, wherein determining whether to release the first application layer measurement comprises:
when the first message further carries secondary cell group configuration information, and the secondary cell group configuration information carries third indication information, determining, by the terminal device, to retain the first application layer measurement, wherein the third indication information indicates the terminal device to retain the first application layer measurement; or
when the first message further carries secondary cell group configuration information, and the secondary cell group configuration information carries fourth indication information, releasing, by the terminal device, the first application layer measurement, wherein the fourth indication information indicates the terminal device to release the first application layer measurement.

13. The method according to claim 12, wherein the third indication information further indicates the terminal device to adjust an access network device to which the first application layer measurement result is reported from the second access network device to the first access network device, and the method further comprises:
adjusting, by the terminal device, the access network device to which the first application layer measurement result is reported from the second access network device to the first access network device.

14. The method according to claim 13, wherein after adjusting, by the terminal device, the access network device to which the first application layer measurement result is reported from the second access network device to the first access network device, the method further comprises:
when determining that the first application layer measurement result is not correctly received by the second access network device, reporting, by the terminal device, the first application layer measurement result to the first access network device.

15. An application layer measurement method, comprising:
receiving, by a third access network device, first application layer measurement information from a first access network device, wherein the first application layer measurement information comprises one or more of the following information: an application layer measurement identifier of a first application layer measurement, reference information of the first application layer measurement, address information of a measurement collection entity corresponding to the first application layer measurement, effective area information corresponding to the first application layer measurement, and an access network device to which a first application layer measurement result is currently reported, the first application layer measurement corresponds to first application layer measurement configuration information of a second access network device, and the first application layer measurement result is a measurement result of the first application layer measurement; and
when determining, based on the first application layer measurement information, to change an access network device to which the first application layer measurement result is reported, and that the access network device to which the first application layer measurement result is currently reported is the second access network device, sending, by the third access network device, first information to a terminal device, wherein the first information indicates the terminal device to change the access network device to which the first application layer measurement result is reported; or
when determining, based on the first application layer measurement information, to release the first application layer measurement, sending, by the third access network device, first information to a terminal device, wherein the first information indicates the terminal device to release the first application layer measurement.

16. The method according to claim 15, wherein the method further comprises:
sending, by the third access network device, a secondary access network device addition request acknowledgment message to the first access network device, wherein the secondary access network device addition request acknowledgment message is used to request the terminal device to send the first application layer measurement result to the first access network device.

17. The method according to claim 16, wherein the secondary access network device addition request acknowledgment message further indicates an application layer measurement that has been accepted by the third access network device.

18. An application layer measurement method, comprising:
receiving, by a terminal device, a fourth message from a first access network device, wherein the fourth message carries full configuration indication information; and
if secondary cell group configuration information carried in the fourth message does not carry an application layer measurement identifier, releasing first application layer measurement, wherein the first application layer measurement corresponds to first application layer measurement configuration information of the second access network device.

19. The method according to claim 18, wherein the method further comprises:
if information other than the secondary cell group configuration information in the fourth message does not carry the application layer measurement identifier, releasing a second application layer measurement, wherein the second application layer measurement corresponds to second application layer measurement configuration information of the first access network device.

20. An application layer measurement method, comprising:
when conditional handover CHO or conditional primary secondary cell addition CPA or conditional primary secondary cell change CPC has been configured and a trigger condition of a target cell is met, receiving, by an access network device corresponding to the target cell, measurement status information of a first application layer measurement, wherein the measurement status information of the first application layer measurement comprises start indication information, and the start indication information indicates whether the first application layer measurement is started.

21. The method according to claim 20, wherein the measurement status information of the first application layer measurement is from a terminal device, or from a first access network device, or from a second access network device.

22. The method according to claim 20 or 21, wherein the measurement status information of the first application layer measurement further comprises one or more of the following information: an application layer measurement identifier of the first application layer measurement, reference information of the first application layer measurement, and end indication information of the first application layer measurement, and the end indication information indicates whether the first application layer measurement ends.

23. An application layer measurement method, comprising:
sending, by the terminal device, measurement status information of a first application layer measurement to an access network device corresponding to the target cell, wherein the measurement status information of the first application layer measurement comprises start indication information, and the start indication information indicates whether the first application layer measurement is started; and
determining, by the terminal device, a target cell from the at least one candidate cell based on the trigger condition of each candidate cell in the at least one candidate cell, wherein a trigger condition of the target cell is met; and
sending, by the terminal device, measurement status information of first application layer measurement to an access network device corresponding to the target cell, wherein the measurement status information of the first application layer measurement comprises start indication information, and the start indication information indicates whether the first application layer measurement is started, wherein
the first application layer measurement corresponds to first application layer measurement configuration information of a second access network device.

24. An application layer measurement method, comprising:
when conditional handover CHO or conditional primary secondary cell addition CPA or conditional primary secondary cell change CPC has been configured for a terminal device and a trigger condition of a target cell is met, sending, by a first access network device, measurement status information of a first application layer measurement to an access network device corresponding to the target cell, wherein the measurement status information of the first application layer measurement comprises start indication information, and the start indication information indicates whether the first application layer measurement is started.

25. The method according to claim 24, wherein the measurement status information of the first application layer measurement further comprises one or more of the following information: an application layer measurement identifier of the first application layer measurement, reference information of the first application layer measurement, and end indication information of the first application layer measurement, and the end indication information indicates whether the first application layer measurement ends.

26. An application layer measurement method, comprising:
when conditional primary secondary cell change CPC has been configured for a terminal device and a trigger condition of a target cell is met, sending, by a second access network device, measurement status information of a first application layer measurement to an access network device corresponding to the target cell, wherein the measurement status information of the first application layer measurement comprises start indication information, and the start indication information indicates whether the first application layer measurement is started; and
the first application layer measurement corresponds to first application layer measurement configuration information that has been sent.

27. The method according to claim 26, wherein the measurement status information of the first application layer measurement further comprises one or more of the following information: an application layer measurement identifier of the first application layer measurement, reference information of the first application layer measurement, and end indication information of the first application layer measurement, and the end indication information indicates whether the first application layer measurement ends.

28. A communication apparatus, wherein the communication apparatus comprises a processing module and a transceiver module, and the processing module and the transceiver module are used by the communication apparatus to implement the method according to any one of claims 1 to 27.

29. A communication apparatus, wherein the communication apparatus comprises a processor, the processor is coupled to a memory, and the memory is configured to store a program or instructions; and when the program or the instructions are executed by the processor, the communication apparatus is caused to perform the method according to any one of claims 1 to 27.

30. A computer-readable storage medium, wherein the computer-readable storage medium stores a computer program or instructions; and when the computer program or the instructions are executed, a computer is caused to perform the method according to any one of claims 1 to 27.
